# EUROPÄISCHE PATENTSCHRIFT

(11) **EP 3 487 957 B1**
(45) Veröffentlichungstag und Bekanntmachung des Hinweises auf die Patenterteilung: **12.04.2023**
(21) Anmeldenummer: 17740723.6
(22) Anmeldetag: 12.07.2017
(51) Int. Cl.: C08K 3/32, C08K 3/38, C08K 5/00, C08K 5/52, C08K 7/14, C09K 21/12

(54) **FLAMMSCHUTZMITTELMISCHUNGEN, IHRE HERSTELLUNG UND IHRE VERWENDUNG**
FLAME RETARDANT MIXTURES, THE PRODUCTION AND THE USE THEREOF
MÉLANGES IGNIFUGES, LEUR PRÉPARATION ET LEUR UTILISATION

(30) Priorität: 20.07.2016 DE 102016213282
(43) Veröffentlichungstag der Anmeldung: 29.05.2019
(73) Patentinhaber: Clariant International Ltd, 4132 Muttenz (CH)
(72) Erfinder: BAUER, Harald, 50170 Kerpen (DE); HÖROLD, Sebastian, 86420 Diedorf (DE); SICKEN, Martin, 51149 Köln (DE)
(74) Vertreter: Mikulecky, Klaus
(86) Internationale Anmeldenummer: PCT/EP2017/067611
(87) Internationale Veröffentlichungsnummer: WO 2018/015253

(56) Entgegenhaltungen:
- WO-A1-2011/051121
- WO-A1-2015/101136
- WO-A1-2016/150846
- DE-A1-102010 018 684
- DE-A1-102014 001 222
- DE-A1-102016 203 221
- US-A1- 2015 183 991
- E. GALLO ET AL: "Flame retardant biocomposites: Synergism between phosphinate and nanometric metal oxides", EUROPEAN POLYMER JOURNAL., Bd. 47, Nr. 7, 16. April 2011 (2011-04-16) , Seiten 1390-1401, XP055414478, GB ISSN: 0014-3057, DOI: 10.1016/j.eurpolymj.2011.04.001

## Beschreibung

Nach dem Stand der Technik werden Dialkylphosphinsäuresalze (auch als Dialkylphosphinate bezeichnet) in Flammschutzmittelmischungen in Form ihrer Mg-, Ca-, Al-, Sb-, Sn-, Ge-, Ti-, Fe-, Zr-, Zn-, Ce-, Bi-, Sr-, Mn-, Li-, Na- und K-Salze eingesetzt.

Die Flammschutzmittelmischungen nach dem Stand der Technik besitzen eine begrenzte thermische Beständigkeit. Dies wirkt sich in einem beschränkten Temperaturbereich aus, in dem die Ausgangsstoffe aus Polymer, Flammschutzmittel, Glasfasern und weitere Additive zu flammgeschützten Polymerformmassen compoundiert werden können. Man spricht von einem Verarbeitungsfenster, das von einer unteren und einer oberen Temperaturgrenze begrenzt ist.

Die untere Temperaturgrenze ergibt sich indem erst ab einer bestimmten Temperatur die Zähigkeit des Polymers niedrig genug ist, dass es in den Maschinen transportierbar und mischbar ist.

Die obere Temperatur äußert sich indirekt in einer Zersetzung der Inhaltsstoffe und dem späteren Ausblühen von Zersetzungsprodukten wenn die flammgeschützten Polymerformmassen und Polymerformformkörper unter feuchten Bedingungen gelagert werden. Zersetzt sich das Polymer, können auch die mechanischen Festigkeitseigenschaften der flammgeschützten Polymerformkörper (E-Modul, Biegefestigkeit, Reißdehnung) verringert werden.

Die ältere, nicht vorveröffentlichte WP 2016/150846 A1 offenbart Flammschutzmittelmischungen enthaltend ausgewählte Dialkylphosphinsäuresalze und ausgewählte Alkyl-hydroxyalkylphosphinylorganylcarbonsäuresalze oder Estersalze.

Aus der DE 10 2014 001 222 A1 sind halogenfreie feste Flammschutzmittelmischungen bekannt, die neben ausgewählten festen Diethylphosphinsäuresalzen Aluminiumphosphit enthalten.

Der vorliegenden Erfindung liegt daher die Aufgabe zugrunde, eine thermisch beständigere Flammschutzmittelmischung mit einem weiten Verarbeitungsfenster zur Verfügung zu stellen.

Die Aufgabe wird gelöst durch Zusatz von ausgewählten Eisenverbindungen sowie weiteren Zusätzen, Komponenten C) und D) zu den Salzen von Diorganylphosphinsäuren und insbesondere von Dialkylphosphinsäuren.

Überraschenderweise wurde gefunden, dass die erfindungsgemäßen Flammschutzmittelmischungen ein verbreitertes Verarbeitungsfenster bei der Compoundierung von flammgeschützten Polymerformmassen bzw. beim Spritzgießen von flammgeschützten Polymerformkörpern besitzen und gleichzeitig eine gute Flammschutzwirkung zeigen.

Die Erfindung betrifft daher eine Flammschutzmittelmischung, enthaltend Komponenten A), B1), C) und D) in den Mengen gemäß Anspruch 1 .

Das Eisen der Komponente B1) liegt in Form einer ausgewählten Eisenverbindung vor.

Die Erfindung betrifft daher eine Flammschutzmittelmischung, enthaltend als Komponente A) 0,0001 bis 74,8 Gew.-% Diorganylphosphinsäure-salze der Formel (II) gemäß Anspruch 1 und als Komponente B1) 0,0001 bis 25 Gew.-% einer eisenhaltige Substanz B1) gemäß Anspruch 1 und 0,1 bis 40 Gew.% einer Komponente C) gemäß Anspruch 1, sowie 0,1 bis 40 Gew.% einer Komponente D) gemäß Anspruch 1,
wobei die Summe von A), B1), C) und D) 100 Gew.-% ergibt.

Die Diorganylphosphinsäuresalze der Komponente A) entsprechen Verbindungen der Formel (II) 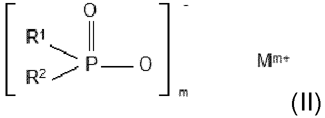 worin
- R¹ und R²: gleich oder verschieden sind und C₁-C₁₈-Alkyl linear, verzweigt oder cyclisch, C₆-C₁₈-Aryl, C₇-C₁₈-Arylalkyl und/oder C₇-C₁₈-Alkylaryl,
- m: 1 bis 4 und
- M: Mg, Ca, Al, Sb, Sn, Ge, Ti, Zr, Zn, Ce, Bi, Sr, Mn, Li, Na und/oder K bedeuten.

Überraschenderweise wurde gefunden, dass die erfindungsgemäße Flammschutzmittelmischungen ein verbreitertes Verarbeitungsfenster bei der Compoundierung von flammgeschützten Polymerformmassen bzw. beim Spritzgießen von flammgeschützten Polymerformkörpern besitzen, bei gleichzeitig guter Flammschutzwirkung.

Bevorzugt sind in Formel (II) R¹, R² gleich oder verschieden und bedeuten, unabhängig voneinander, Methyl, Ethyl, n-Propyl, iso-Propyl, Butyl, n-Butyl, tert.-Butyl, n-Pentyl, 2-Pentyl, 3-Pentyl, 2-Methylbutyl, 3-Methylbutyl (iso-Pentyl), 3-Methylbut-2-yl, 2-Methylbut-2-yl, 2,2-Dimethylpropyl (Neopentyl), Hexyl, Heptyl, Octyl, Nonyl, Decyl, Cyclopentyl, Cyclopentylethyl, Cyclohexyl, Cyclohexylethyl, Phenyl, Phenylethyl, Methylphenyl und/oder Methylphenylethyl.

In der erfindungsgemäßen Flammschutzmittelmischung liegt die Komponente B1) als Eisen(II)dialkylphosphinate, Eisen(III)dialkylphosphinate, Eisen(II)monoalkylphosphinate, Eisen(III)monoalkylphosphinate, Eisen(II)alkylphosphonate, Eisen(III)alkylphosphonate, Eisen(II)phosphit, Eisen(III)phosphit, Eisen(II)phosphat und/oder Eisen(III)phosphat vor.

Besonders bevorzugt liegt in der erfindungsgemäßen Flammschutzmittelmischung die Komponente B1) als Eisen(II)bis- und/oder Eisen(III)tris(diethylphosphinat), -(dipropylphosphinat), -(butylethyl-phosphinat), -(n-butylethylphosphinat), -(sec-butylethylphosphinat), -(hexylethylphosphinat), -(dibutylphosphinat), -(hexylbutylphosphinat), -(octylethylphosphinat), -(ethyl(cyclopentylethyl)phosphinat), -(butyl(cyclopentylethyl)phosphinat), -(ethyl(cyclohexylethyl)phosphinat), -(butyl(cyclohexylethyl)phosphinat, -(ethyl(phenylethyl)phosphinat), -(butyl(phenylethyl)phosphinat), -(ethyl(4-methylphenylethyl)phosphinat), -(butyl(4-methylphenylethyl)phosphinat), -(butylcyclopentylphosphinat), -(butylphenylphosphinat), -(ethyl(4-methylphenyl)phosphinat) und/oder -(butyl(4-methylphenyl)phosphinat; um Eisen(II)mono- und/oder Eisen(III)mono(ethylphosphinat), -(propylphosphinat), -(butylphosphinat), -(n-butylphosphinat), -(sec-butylphosphinat), -(hexylphosphinat) und/oder -(octylphosphinat); um Eisen(II)- und/oder Eisen(III)-(ethylphosphonat), -(propylphosphonat), -(butylphosphonat), -(n-butylphosphonat), -(sec-butylphosphonat), -(hexylphosphonat) und/oder -(octylphosphonat) vor.

Besonders bevorzugt liegen die Komponenten A) und B1) als physikalische Mischung vor.

Bevorzugt enthalten die erfindungsgemäßen Flammschutzmittelmischungen
60 bis 99,8999 Gew.-% Komponente A) gemäß Anspruch 1,
0,0001 bis 20 Gew.-% Komponente B1) gemäß Anspruch 1 und
0,1 bis 40 Gew.-% einer weiteren Komponente C) gemäß Anspruch 1,
wobei die Summe der Komponenten A), B1) und C) 100 Gew.-% ergibt mit der Maßgabe, dass es sich bei den Komponenten A), B1) und C) jeweils um unterschiedliche Verbindungen handelt.

Bevorzugt liegen die Komponenten A), B1) und C) als physikalische Mischung vor.

Bevorzugt bilden die Komponenten A) und C) miteinander eine einheitliche chemische Verbindung und diese liegt dann als physikalische Mischung mit der Komponente B1) vor.

Bei der Komponente C) handelt es sich um Telomere der Formel (III)

H-(C_{w}H_{2w})ₖ P(O)(OM) (CₓH₂ₓ)ₗ-H (III)

wobei in Formel (III), unabhängig voneinander,

| | | |
|---|---|---|
| k | 1 bis 9, l | 1 bis 9, |
| w | 2 bis 9, x | 2 bis 9, |

bedeuten und
M Mg, Ca, Al, Sb, Sn, Ge, Ti, Fe, Zr, Zn, Ce, Bi, Sr, Mn, Li, Na, K und/oder eine protonierte Stickstoffbase bedeutet,
und die Gruppen (C_{w}H_{2w})ₖ, (CₓH₂ₓ)ₗ geradlinig oder verzweigt sein können;
und/oder es handelt sich bei den Telomeren um solche der Formel (I) 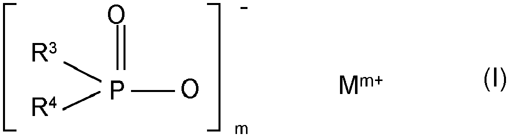 worin
   - R³, R⁴: gleich oder verschieden sind und C₆-C₁₀-Arylen, C₇-C₂₀-Alkylarylen, C₇-C₂₀-Arylalkylen und/oder C₃-C₁₆-Cycloalkyl oder -Bicycloalkyl,
   - M: Mg, Ca, Al, Sb, Sn, Ge, Ti, Fe, Zr, Zn, Ce, Bi, Sr, Mn, Li, Na, K und/oder eine protonierte Stickstoffbase bedeutet und wobei es sich bei den Komponenten A) und C) um unterschiedliche Verbindungen handelt.

Besonders bevorzugt bedeutet in Formel (III) w und x jeweils 2 oder 3 und k und I jeweils 1 bis 3 und M Al, Ti, Fe oder Zn.

Bevorzugt handelt es sich bei den Telomeren um Metallsalze der Ethylbutylphosphinsäure, Dibutylphosphinsäure, Ethylhexylphosphinsäure, Butylhexylphosphinsäure, Ethyloctylphosphinsäure, sec-Butylethylphosphinsäure, 1-Ethylbutyl-Butyl-phosphinsäure, Ethyl-1-Methylpentyl-phosphinsäure, Di-sec-Butylphosphinsäure (Di-1-Methyl-propylphosphinsäure), Propyl-Hexylphosphinsäure, Dihexylphosphinsäure, Hexyl-Nonylphosphinsäure, Propyl-Nonylphosphinsäure, Dinonylphosphinsäure, Dipropylphosphinsäure, Butyl-Octylphosphinsäure, Hexyl-Octylphosphinsäure, Dioctylphosphinsäure, Ethyl(cyclopentylethyl)phosphinsäure, Butyl(cyclopentylethyl)phosphinsäure, Ethyl(cyclohexylethyl)phosphinsäure, Butyl(cyclohexylethyl)phosphinsäure, Ethyl(phenylethyl)phosphinsäure, Butyl(phenylethyl)phosphinsäure, Ethyl(4-methylphenylethyl)phosphinsäure, Butyl(4-methylphenylethyl)phosphinsäure, Butylcyclopentylphosphininsäure, Butylcyclohexylethylphosphinsäure, Butylphenylphosphinsäure, Ethyl(4-methylphenyl)phosphinsäure und/oder Butyl(4-methylphenyl)phosphinsäure, wobei das Metall des Metallsalzes aus der Gruppe Mg, Ca, Al, Sb, Sn, Ge, Ti, Fe, Zr, Zn, Ce, Bi, Sr, Mn, Li, Na und/oder K entstammt.

Die erfindungsgemäßen Flammschutzmittelmischungen enthalten weiterhin als Komponente D) Synergisten, wobei es sich bei den Synergisten um Melaminphosphat, Dimelaminphosphat, Pentamelamintriphosphat, Trimelamindiphosphat, Tetrakismelamintriphosphat, Hexakismelaminpentaphosphat, Melamindiphosphat, Melamintetraphosphat, Melaminpyrophosphat, Melaminpolyphosphate, Melampolyphosphate, Melempolyphosphate und/oder Melonpolyphosphate; um Melaminkondensationsprodukte wie Melam, Melem und/oder Melon; um oligomere Ester des Tris(hydroxyethyl)isocyanurats mit aromatischen Polycarbonsäuren, Benzoguanamin, Tris(hydroxyethyl)isocyanurat, Allantoin, Glycouril, Melamin, Melamincyanurat, Harnstoffcyanurat, Dicyandiamid und/oder Guanidin; um stickstoffhaltige Phosphate der Formeln (NH₄)_{y}H_{3-y}PO₄ bzw. (NH₄PO₃)_{z}, mit y gleich 1 bis 3 und z gleich 1 bis 10.000; um Aluminiumphosphite, Aluminiumpyrophosphite, Aluminiumphosphonate, Aluminiumpyrophosphonate; um Silicate, Zeolite, Kieselsäuren, Keramikpulver, Zinkverbindungen, z. B. Zinkborat, Zinkcarbonat, Zinkstannat, Zinkhydroxystannat, Zinkphosphat, Zinksulfid, Zinkoxid, Zinkhydroxid, Zinnoxidhydrat, basisches Zink-Silikat, Zinkmolybdat Magnesiumhydroxid, Hydrotalcit, Magnesiumcarbonat und/oder Calciummagnesiumcarbonat handelt.

Die Flammschutzmittelmischungen enthalten dabei
a) 0,0001 bis 74,8 Gew.-% Komponente A),
b) 0,0001 bis 25 Gew.-% Komponente B1),
c) 0,1 bis 40 Gew.-% Komponente C) und
d) 0,1 bis 40 Gew.-% Komponente D),
wobei die Summe von a), b), c) und d) 100 Gew.-% ergibt mit der Maßgabe, dass es sich bei den Komponenten A), B1) und C) um unterschiedliche Verbindungen handelt.

Bevorzugt weisen die Flammschutzmittelmischungen
eine Teilchengröße von 0,01 bis 1000 µm,
eine Schüttdichte von 50 bis 1500 g/l,
eine Stampfdichte von 100 g/l bis 1100 g/l,
einen Schüttwinkel von 5 bis 45 Grad,
eine BET-Oberfläche von 1 bis 40 m²/g,
L-Farbwerte von 85 bis 99,9,
a-Farbwerte von -4 bis +9,
b-Farbwerte von -2 bis +6 auf.

Besonders bevorzugt weisen die Flammschutzmittelmischungen
eine Teilchengröße von 0,5 bis 800 µm,
eine Schüttdichte von 80 bis 800 g/l,
eine Stampfdichte von 600 g/L bis 800 g/l,
einen Schüttwinkel von 10 bis 40 Grad auf.

Die Erfindung betrifft auch ein Verfahren zur Herstellung von Flammschutzmittelmischungen nach einem oder mehreren der Ansprüche 1 bis 10, dadurch gekennzeichnet, dass man
a) in einer Prozessstufe 1 0,9 bis 1,1 Moleküle Olefin pro P an ein wasserlösliches Salz der hypophosphorigen Säure oder der Säure selbst addiert,
b) in einer Prozessstufe 2 0,9 bis 1,1 zusätzliche Moleküle Olefin pro P an das Zwischenprodukt aus a) zu Dialkylphosphinsäure oder deren Salz addiert
c) in einer Prozessstufe 3 ein bis 9 weitere Olefinmoleküle an 0 bis 20 % der Dialkylphosphinatmoleküle aus Prozessstufe 1 addiert, so dass sich Telomere bilden, wobei im Falle des Entstehens von Dialkylphosphinsäure diese in ein entsprechendes Salz überführt,
d) in einer Prozessstufe 4 eine Kristallisation des Zwischenprodukts aus b) und/oder c) und einem Metallsalz durchführt,
e) in einer Prozessstufe 5 eine Eisenverbindung / Komponente B) zumischt.

Die Erfindung betrifft ebenfalls ein Verfahren zur Herstellung von Flammschutzmittelmischungen nach einem oder mehreren der Ansprüche 1 bis 10, dadurch gekennzeichnet, dass man
a) in einer Prozessstufe 1 0,9 bis 1,1 Moleküle Olefin pro P an ein wasserlösliches Salz der hypophosphorigen Säure oder der Säure selbst addiert,
b) in einer Prozessstufe 2 0,9 bis 1,1 zusätzliche Moleküle Olefin pro P an das Zwischenprodukt aus a) zu Dialkylphosphinsäure oder deren Salz addiert
c) in einer Prozessstufe 3 ein bis 9 weitere Olefinmoleküle an 0,1 bis 20 % der Dialkylphosphinatmoleküle aus Prozessstufe 1 addiert, so dass sich Telomere bilden, wobei im Falle des Entstehens von Dialkylphosphinsäure diese in ein entsprechendes Salz überführt,
d) in einer Prozessstufe 4 eine Cofällung des Zwischenprodukts aus c) und einem Metallsalz durchführt, und
e) in einer Prozessstufe 5 eine Eisenverbindung / Komponente B) zumischt.

Die Erfindung betrifft ein weiteres Verfahren zur Herstellung von Flammschutzmittelmischungen nach einem oder mehreren der Ansprüche 1 bis 10, dadurch gekennzeichnet, dass man
a) in einer Prozessstufe 1 0,9 bis 1,1 Moleküle Olefin pro P an ein wasserlösliches Salz der hypophosphorigen Säure oder der Säure selbst addiert,
b) in einer Prozessstufe 2 0,9 bis 1,1 zusätzliche Moleküle Olefin pro P an das Zwischenprodukt aus a) zu Dialkylphosphinsäure oder deren Salz addiert wobei im Falle des Entstehens von Dialkylphosphinsäure diese in ein entsprechendes Salz überführt,
c) in einer Prozessstufe 3 eine Cofällung des Zwischenprodukts aus b) und einem Eisensalz durchführt, und
d) in einer Prozessstufe 4 die Telomeren / Komponente C) zumischt.

Schließlich betrifft die Erfindung ein Verfahren zur Herstellung von Flammschutzmittelmischungen nach einem oder mehreren der Ansprüche 1 bis 10, dadurch gekennzeichnet, dass man
a) in einer Prozessstufe 1 0,9 bis 1,1 Moleküle Olefin pro P an ein wasserlösliches Salz der hypophosphorigen Säure oder der Säure selbst addiert,
b) in einer Prozessstufe 2 0,9 bis 1,1 zusätzliche Moleküle Olefin pro P an das Zwischenprodukt aus a) zu Dialkylphosphinsäure oder deren Salz addiert, wobei im Falle des Entstehens von Dialkylphosphinsäure diese in ein entsprechendes Salz überführt,
c) in einer Prozessstufe 3 eine Kristallisation des Zwischenprodukts aus b) und einem Metallsalz durchführt,
e) in einer Prozessstufe 4 ggf. Telomere / Komponente C) zumischt und
f) in einer Prozessstufe 5 eine Eisenverbindung / Komponente B) zumischt.

Bevorzugt werden bei den vorgenannten Verfahren als Eisenver-bindungen und/oder als Eisensalze solche mit Anionen der siebten Hauptgruppe; mit Anionen der Oxosäuren der siebten Hauptgruppe; mit Anionen der sechsten Hauptgruppe; mit Anionen der Oxosäuren der sechsten Hauptgruppe; mit Anionen der fünften Hauptgruppe; mit Anionen der Oxosäuren der fünften Hauptgruppe; mit Anionen der Oxosäuren der vierten Hauptgruppe; mit Anionen der Oxosäuren der dritten Hauptgruppe; mit Anionen der Pseudohalogenide; mit Anionen der Oxosäuren der Übergangsmetalle; mit organischen Anionen aus der Gruppe der Mono-, Di-, Oligo-, Polycarbonsäuren, der Essigsäure, der Trifluoressigsäure, Propionate, Butyrate, Valerate, Caprylate, Oleate, Stearate, der Oxalsäure, der Weinsäure, Citronensäure, Benzoesäure, Salicylate, Milchsäure, Acrylsäure, Maleinsäure, Bernsteinsäure, von Aminosäuren, von sauren Hydroxofunktionen, Para-Phenolsulfonate, Para-Phenolsulfonathydrate, Acetylacetonathydrate, Tannate, Dimethyldithiocarbamate, Trifluormethansulfonat, Alkylsulfonate und/oder Aralkylsulfonate; als elementares Eisen; als Eisenverbindung in der Form ihrer Fluoride, Chloride, Bromide, Iodide, Iodat, Perchlorat, Oxide, Hydroxide, Peroxide, Superoxide, Sulfate, Hydrogensulfate, Sulfathydrate, Sulfite, Peroxosulfate, Nitride, Phosphide, Nitrate, Nitrathydrate, Nitrite, Phosphate, Peroxophosphate, Phosphite, Hypophosphite, Pyrophosphate, Carbonate, Hydrogencarbonate, Hydroxidcarbonate, Carbonathydrate, Silicate, Hexafluorosilicate, Hexafluorosilicathydrate, Stannate, Borate, Polyborate, Peroxoborate, Thiocyanate, Cyanate, Cyanide, Chromate, Chromite, Molybdate, Permanganate, Formiate, Acetate, Acetathydrate, Trifluoracetathydrate, Propionate, Butyrate, Valerate, Caprylate, Oleate, Stearate, Oxalate, Tartrate, Citrate, basische Citrate, Citrathydrate, Benzoate, Salicylate, Lactate, Lactathydrate, Acrylsäure, Maleinsäure, Bernsteinsäure, Glyzin, Phenolate, Para-Phenolsulfonate, Para-Phenolsulfonathydrate, Acetylacetonathydrate, Tannate, Dimethyldithiocarbamate, Trifluormethansulfonat, Alkylsulfonate und/oder Aralkylsulfonate vorliegt; und/oder als Legierungen von Eisen mit Kupfer, Zinn, Nickel, Chrom, Molybdän, Wolfram, Vanadium eingesetzt.

Bevorzugt werden bei den vorgenannten Verfahren als Metallsalze solche mit einem Kation aus der Gruppe Mg, Ca, Al, Sb, Sn, Ge, Ti, Fe, Zr, Zn, Ce, Bi, Sr, Mn, Li, Na und/oder K und den gleichen Anionen wie bei den Eisenverbindungen und/oder als Eisensalze eingesetzt.

Bevorzugt werden bei den vorgenannten Verfahren nach einem oder mehreren der Ansprüche 11 bis 16 in den entsprechenden Prozessstufen Initiatoren, Radikalinitiatoren, Photoinitiatoren, Inhibitoren, Radikalsteuerungshilfsmittel, Nukleierungsmittel, Cokristallisationshilfsmittel, Kristallisierungshilfsmittel, starke Elektrolyte, Netzmittel, Lösungsmittel, Säure, Laugen, alkalische Verbindungen, starke alkalische Lösungen, Fließhilfsmittel, Bleichmittel, Kupplungsreagenzien, Haftvermittler, Trennmittel, Kunststoffadditive, Beschichtungsadditive, sowie Flammschutzmittel, die von der Flammschutzmittelmischung nach mindestens einem der Ansprüche 1 bis 10 umhüllt sind, zugesetzt.

Die Erfindung betrifft auch die Verwendung von Flammschutzmittelmischungen nach einem oder mehreren der Ansprüche 1 bis 10 als Zwischenprodukt für weitere Synthesen, als Binder, als Vernetzer bzw. Beschleuniger beim Aushärten von Epoxyharzen, Polyurethanen und ungesättigten Polyesterharzen, als Polymersstabilisatoren, als Pflanzenschutzmittel, als Sequestrierungsmittel, als Mineralöl-Additiv, als Korrosionsschutzmittel, in Wasch- und Reinigungsmittelanwendungen und in Elektronikanwendungen.

Insbesondere betrifft die vorliegende Erfindung die Verwendung von Flammschutzmittelmischungen nach einem oder mehreren der Ansprüche 1 bis 10 als Flammschutzmittel, als Flammschutzmittel für Klarlacke und Intumeszenzbeschichtungen, als Flammschutzmittel für Holz und andere cellulosehaltige Produkte, als reaktives und/oder nicht reaktives Flammschutzmittel für Polymere, zur Herstellung von flammgeschützten Polymerformmassen, zur Herstellung von flammgeschützten Polymerformkörpern und/oder zum flammhemmend Ausrüsten von Polyester und Cellulose-Rein- und Mischgeweben durch Imprägnierung.

Die Erfindung umfasst auch flammgeschützte thermoplastische oder duroplastische Polymerformmassen, Polymer-Formkörper, -Filme, -Fäden und -Fasern enthaltend 0,5 bis 50 Gew.-%, vorzugsweise 0,5 bis 45 Gew.-% Flammschutzmittelmischungen nach einem oder mehreren der Ansprüche 1 bis 10, 0,5 bis 95 Gew.-% thermoplastisches oder duroplastisches Polymer oder Mischungen derselben, 0 bis 55 Gew.-% Additive und 0 bis 70 Gew.-%, vorzugsweise 0 bis 55 Gew.-% Füllstoff bzw. Verstärkungsmaterialien, wobei die Summe der Komponenten 100 Gew.-% beträgt.

Bei den thermoplastischen Polymeren handelt es sich dabei um solche der Art Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol) oder PPE/HIPS (Polyphenylenether/Polystyrol-HI) Kunststoffe und bei den duroplastischen Polymeren um solche der Art Formaldehyd-, Epoxid-, Melamin-Phenolharz-Polymere, ungesättigte Polyester, Epoxidharze und/oder Polyurethane.

Bevorzugt enthalten die thermoplastischen oder duroplastischen Polymerformmassen, Polymer-Formkörper, -Filme, -Fäden und -Fasern weitere Additive, wobei es sich dabei um Antioxidantien, UV-Stabilisatoren, Gammastrahlenstilisatoren, Hydrolysestabilisatoren, Antistatika, Emulgatoren, Nukleierungsmittel, Weichmacher, Verarbeitungshilfsmittel, Schlagzähmodifikatoren, Farbstoffe, Pigmente und andere handelt.

Bevorzugte Diorganylphosphinsäuresalze sind die Dialkylphosphinsäuresalze, die dann ebenfalls der Formel (II) entsprechen.

Bevorzugte Dialkylphosphinsäuresalze sind insbesondere solche der Formel (II) in denen R¹ und R² gleich oder verschieden sind und C₁-C₁₈-Alkyl linear, verzweigt oder cyclisch bedeuten.

Bevorzugt sind Diethylphosphinsäuresalze, in denen das Kation zur Salzbildung Mg, Ca, Al, Sb, Sn, Ge, Ti, Zr, Zn, Ce, Bi, Sr, Mn, Li, Na oder K ist und davon sind wiederum Al, Ti und Zn besonders bevorzugt.

Bevorzugte Flammschutzmittelmischungen sind dadurch kennzeichnet, dass sie 99,9999 bis 80 Gew.-% Komponente A) und 0,0001 bis 20 Gew.-% Komponente B1) enthalten.

Insbesondere enthalten die Flammschutzmittelmischungen 99,9995 bis 95 Gew.-% Komponente A) und 0,0005 bis 5 Gew.-% Komponente B1).

Bevorzugt sind Flammschutzmittelmischungen, die 99,9999 bis 80 Gew.-% Komponente A) und 0,0001 bis 20 Gew.-% Eisen (Komponente B) enthalten.

Besonders bevorzugt sind Flammschutzmittelmischungen, die 99,9995 bis 95 Gew.-% Komponente A) und 0,0005 bis 5 Gew.-% Eisen (Komponente B) enthalten.

Telomere entstehen bei der Anlagerung des Olefins an das Hypophosphition. Es werden nicht nur zwei Moleküle Olefin zum Dialkylphosphination angelagert, sondern mehrere. Eine oder beide Alkylketten werden so um eine oder mehrere weitere Olefineinheiten verlängert.

Bevorzugte Telomere sind solche der Formel (III)

H-(C_{w}H_{2w})ₖ P(O)(OMe) (CₓH₂ₓ)ₗ-H (III)

wobei in Formel (III), unabhängig voneinander,
k 1 bis 9, l 1 bis 9, w 2 bis 9 und x 2 bis 9 und Me Mg, Ca, Al, Sb, Sn, Ge, Ti, Fe, Zr, Zn, Ce, Bi, Sr, Mn, Li, Na und/oder K bedeuten.

Bevorzugt liegen die Telomere als Al-, Ti-, Fe- und/oder Zn-Salz vor.

Bevorzugt bedeuten in Formel (III) w und x auch jeweils 2 bis 4 und k und I jeweils 1 bis 4.

Bei Verwendung von Ethylen als Olefin bei der Herstellung der erfindungsgemäßen Dialkylphosphinsäuresalze entstehen bevorzugt Telomere des Typs Ethylbutylphosphinsäure, Dibutylphosphinsäure, Ethylhexylphosphinsäure, Butylhexylphosphinsäure, Ethyloctylphosphinat usw. und/oder deren Salze.

Bei Propen ist die Abfolge sinngemäß.

Bevorzugte Olefine sind Ethen, Propen, 1-Buten, 2-Buten, 1-Penten, 1-Hexen und 1-Octen.

Die Stereochemie erlaubt auch die Bildung von verzweigten Alkylketten, z. B. sec-Butylethylphosphinat, 1-Ethylbutyl-Butyl-phosphinat, Ethyl-1-Methylpentyl-phosphinat, Di-sec-Butylphosphinat (Di-1-Methyl-propylphosphinat) usw.

Telomere selbst sind phosphorhaltige Verbindungen. Ihr Gehalt wird in Prozent aller Phosphor enthaltenden Inhaltsstoffe angegeben (P-%). Er wird mittels ³¹P-NMR bestimmt.

Das Eisen liegt bevorzugt als Eisensalz oder Eisenverbindung vor und ist physikalisch mit der Komponente A) gemischt. Durch die erfindungsgemäßen Verfahren ist es gleichmäßig mit dem Dialkylphosphinsäuresalz oder der Dialkylphosphinsäuresalz-Telomersalz-Mischung gemischt.

Bevorzugt handelt es sich bei den Eisensalzen und den Eisenverbindungen zur Herstellung der erfindungsgemäßen physikalisch gemischten Flammschutzmittelmischungen um Eisen (II) und/oder Eisen(III)salze.

Bevorzugt handelt es sich bei den Eisensalzen um Eisen(II)salze und/oder Eisen(III)salze mit anorganischen Anionen der siebten Hauptgruppe (Halogenide) wie z. B. Fluoride, Chloride, Bromide, lodide; mit Anionen der Oxosäuren der siebten Hauptgruppe (Hypohalogenite, Halogenite, Halogenate, z. B. Iodat, Perhalogenate, z. B. Perchlorat); mit Anionen der sechsten Hauptgruppe (Chalgogenide) wie z. B. Oxide, Hydroxide, Peroxide, Superoxide; mit Anionen der Oxosäuren der sechsten Hauptgruppe (Sulfate, Hydrogensulfate, Sulfathydrate, Sulfite, Peroxosulfate); mit Anionen der fünften Hauptgruppe (Pnicogenide) wie z. B. Nitride, Phosphide; mit Anionen der Oxosäuren der fünften Hauptgruppe (Nitrat, Nitrathydrate, Nitrite, Phosphate, Peroxophosphate, Phosphite, Hypophosphite, Pyrophosphate); mit Anionen der Oxosäuren der vierten Hauptgruppe (Carbonate, Hydrogencarbonate, Hydroxidcarbonate, Carbonathydrate, Silicate, Hexafluorosilicate, Hexafluorosilicathydrate, Stannate); mit Anionen der Oxosäuren der dritten Hauptgruppe (Borate, Polyborate, Peroxoborate); mit Anionen der Pseudohalogenide (Thiocyanate, Cyanate, Cyanide); mit Anionen der Oxosäuren der Übergangsmetalle (Chromate, Chromite, Molybdate, Permanganat).

Bevorzugt handelt es sich bei den Eisensalzen um Eisen(II)salze und/oder Eisen(III)salze mit organischen Anionen aus der Gruppe der Mono-, Di-, Oligo-, Polycarbonsäuren (Salze der Ameisensäure (Formiate)), der Essigsäure (Acetate, Acetathydrate), der Trifluoressigsäure (Trifluoracetathydrate), Propionate, Butyrate, Valerate, Caprylate, Oleate, Stearate, der Oxalsäure (Oxalate), der Weinsäure (Tartrate), Citronensäure (Citrate, basische Citrate, Citrathydrate), Benzoesäure (Benzoate), Salicylate, Milchsäure (Lactat, Lactathydrate), Acrylsäure, Maleinsäure, Bernsteinsäure, von Aminosäuren (Glyzin), von sauren Hydroxofunktionen (Phenolate etc), Para-Phenolsulfonate, Para-Phenolsulfonathydrate, Acetylacetonathydrate, Tannate, Dimethyldithiocarbamate, Trifluormethansulfonat, Alkylsulfonate und/oder Aralkylsulfonate.

Bevorzugt handelt es sich bei den Eisensalzen um Eisen(II)- und/oder Eisen(III)-borate, -sulfate, -sulfathydrate, -hydroxosulfathydrate, gemischte -hydroxosulfathydrate, -oxysulfate, -acetate, -nitrate, fluoride, -fluoridhydrate, -chloride, chloridhydrate, -oxychloride, -bromide, -iodide, -iodidhydrate und/oder -carbonsäurederivate.

Bevorzugt handelt es sich bei den Metallverbindungen um Eisen(II)- und/oder Eisen(III)-acetate, -chloride, -nitrate, -sulfate, -phosphinate, -monoalkylphosphinate, und/oder -alkylphosphonate.

Das in Anspruch 1 genannte Eisen liegt in Form eines Eisensalzes bzw. einer Eisenverbindung (Komponente B1)) vor. Bevorzugte Eisensalze sind Eisen(II)monoalkylphosphinate, hierzu gehören sind Eisen(II)(ethylphosphinat), Eisen(II)(propylphosphinat), Eisen(II)(butylphosphinat, Eisen(II)(n-butylphosphinat), Eisen(II)(sec-butylphosphinat), Eisen(II)(hexylphosphinat) und/oder Eisen(II)(octylphosphinat).

Bevorzugte Eisensalze sind Eisen(III)monoalkylphosphinate, zu denen Eisen(III)-(ethylphosphinat), Eisen(III)(propylphosphinat), Eisen(III)(butylphosphinat), Eisen(III)(n-butylphosphinat, Eisen(III)(sec-butylphosphinat), Eisen(III)(hexylphosphinat), Eisen(III)(hexylphosphinat) und/oder Eisen(III)-(octylphosphinat) gehören.

Bevorzugte Eisensalze sind Eisen(II)alkylphosphonate, zu denen Eisen(II)(ethylphosphonat), Eisen(II)(propylphosphonat), Eisen(II)(butylphosphonat), Eisen(II)(n-butylphosphonat), Eisen(II)(sec-butylphosphonat), Eisen(II)- (hexylphosphonat) und/oder Eisen(II)(octylphosphonat) gehören.

Bevorzugte Eisensalze sind Eisen(III)alkylphosphonate, zu denen Eisen(III)(ethylphosphonat), Eisen(III)(propylphosphonat), Eisen(III)(butylphosphonat), Eisen(III)(n-butylphosphonat), Eisen(III)(sec-butylphosphonat), Eisen(III)(hexylphosphonat) und/oder Eisen(III)(octylphosphonat) gehören.

Bevorzugte cogefällte Eisensalze sind Eisen(II)dialkylphosphinate, zu denen Eisen- (II)bis(diethylphosphinat), Eisen(II)bis(dipropylphosphinat), Eisen(II)-bis(butylethylphosphinat), Eisen(II)bis(n-butylethylphosphinat), Eisen(II)bis(sec-butylethylphosphinat), Eisen(II)bis(hexylethylphosphinat), Eisen(II)-bis(dibutylphosphinat), Eisen(II)bis(hexylbutylphosphinat) und/oder Eisen(II)-bis(octylethylphosphinat) gehören.

Bevorzugte Eisensalze sind Eisen(III)dialkylphosphinate, zu denen Eisen-(III)tris(diethylphosphinat), Eisen(III)tris(dipropylphosphinat), Eisen(III)tris(butylethylphosphinat), Eisen(III)tris(n-butylethylphosphinat), Eisen(III)tris(sec-butylethylphosphinat), Eisen(III)tris(hexylethylphosphinat), Eisen(III)tris(dibutylphosphinat), Eisen(III)tris(hexylbutylphosphinat) und/oder Eisen(III)tris(octylethylphosphinat) gehören.

Für die Stabelilität der erfindungsgemäßen physikalisch gemischten Flammschutzmittelmischung gegen Entmischung beim Rütteln sind geringe Teilchengrößen bevorzugt.

Besonders bevorzugt sind mittlere Teilchengrößen d₅₀ von Dialkylphosphinsäuresalz 0,01 - 1000 µm, Dialkylphosphinatsalz-Telomersalz-Cofällung 0,01 - 1000 µm, erfindungsgemäße Flammschutzmittelmischung 0,01 - 1000 µm.

Besonders bevorzugt sind mittlere Teilchengrößen d₅₀ von Dialkylphosphinsäuresalz 0,1 - 90 µm, Dialkylphosphinatsalz-Telomersalz-Mischung 0,1 - 90 µm, erfindungsgemäße Flammschutzmittelmischung 0,1 -90 µm.

Bei den erfindungsgemäßen Verfahren kann jede Form von Hilfsmittel zusetzt werden, die Vorteile im Produktionsverfahren verschafft oder die Produkteigenschaften verbessert.

Bei den erfindungsgemäßen Verfahren können ein oder mehrere Synergisten in einer oder mehreren weiteren Prozessstufen zugemischt werden.

Bevorzugt enthält die flammgeschützte Polymerformmasse
5 bis 45 Gew.-% der erfindungsgemäßen Flammschutzmittelmischung,
5 bis 90 Gew.-% Polymer oder Mischungen derselben,
1 bis 40 Gew.-% Additive und
20 bis 55 Gew.-% Glasfasern.

Bevorzugt entstammen die Polymere aus der Gruppe der thermoplastischen Polymere wie Polyester, Polystyrol oder Polyamid und/oder der duroplastischen Polymere.

Bevorzugt handelt es sich bei den Polymeren um, um Polymere von Mono- und Diolefinen, beispielsweise Polypropylen, Polyisobutylen, Polybuten-1, Poly-4-methyl-penten-1, Polyisopren oder Polybutadien sowie Polymerisate von Cycloolefinen wie z. B. von Cyclopenten oder Norbornen; ferner Polyethylen (das gegebenenfalls vernetzt sein kann), z. B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), verzweigtes Polyethylen niederer Dichte (VLDPE), sowie Mischungen davon.

Bevorzugt handelt es sich bei den Polymeren um Copolymere von Mono- und Diolefinen untereinander oder mit anderen Vinylmonomeren, wie z. B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere und deren Copolymere mit Kohlenstoffmonoxid, oder Ethylen-Acrylsäure-Copolymere und deren Salze (lonomere), sowie Terpolymere von Ethylen mit Propylen und einem Dien, wie Hexadien, Dicyclopentadien oder Ethylidennorbornen; ferner Mischungen solcher Copolymere untereinander, z. B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z. B. Polyamiden.

Bevorzugt handelt es sich bei den Polymeren um Kohlenwasserstoffharze (z. B. C₅-C₉) inklusive hydrierte Modifikationen davon (z. B. Klebrigmacherharze) und Mischungen von Polyalkylenen und Stärke.

Bevorzugt handelt es sich bei den Polymeren um Polystyrol (Polystyrol 143E (BASF), Poly-(p-methylstyrol), Poly-(alpha-methylstyrol).

Bevorzugt handelt es sich bei den Polymeren um Copolymere von Styrol oder alpha-Methylstyrol mit Dienen oder Acrylderivaten, wie z. B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z. B. einem Polyacrylat, einem Dien-Polymeren oder einem Ethylen-Propylen-Dien-Terpolymeren; sowie Block-Copolymere des Styrols, wie z. B. Styrol-Butadien-Styrol, Styrol-Isopren-Styrol, Styrol-Ethylen/Butylen-Styrol oder Styrol-Ethylen/Propylen-Styrol.

Bevorzugt handelt es sich bei den Polymeren um Pfropfcopolymere von Styrol oder alpha-Methylstyrol, wie z. B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen, wie sie z. B. als sogenannte ABS-, MBS-, ASA- oder AES-Polymere bekannt sind.

Bevorzugt handelt es sich bei den Polymeren um Halogenhaltige Polymere, wie z. B. Polychloropren, Chlorkautschuk, chloriertes und bromiertes Copolymer aus Isobutylen-Isopren (Halobutylkautschuk), chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z. B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

Bevorzugt handelt es sich bei den Polymeren um Polymere, die sich von alpha-, beta-ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile und Copolymere der genannten Monomeren untereinander oder mit anderen ungesättigten Monomeren, wie z. B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

Bevorzugt handelt es sich bei den Polymeren um Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit Olefinen.

Bevorzugt handelt es sich bei den Polymeren um Homo- und Copolymere von cyclischen Ethern, wie Polyalkylenglykole, Polyethylenoxyd, Polypropylenoxyd oder deren Copolymere mit Bisglycidylethern.

Bevorzugt handelt es sich bei den Polymeren um Polyacetale, wie Polyoxymethylen, sowie solche Polyoxymethylene, die Comonomere, wie z. B. Ethylenoxid, enthalten; Polyacetale, die mit thermoplastischen Polyurethanen, Acrylaten oder MBS modifiziert sind.

Bevorzugt handelt es sich bei den Polymeren um Polyphenylenoxide und -sulfide und deren Mischungen mit Styrolpolymeren oder Polyamiden.

Bevorzugt handelt es sich bei den Polymeren um Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

Bevorzugt handelt es sich bei den Polymeren um Polyamide und Copolyamide, die sich von Diaminen und Dicarbonsäuren und/oder von Aminocarbonsäuren oder den entsprechenden Lactamen ableiten, wie Polyamid 2/12, Polyamid 4 (Poly-4-aminobuttersäure, Nylon^{®} 4, Fa. DuPont), Polyamid 4/6 (Poly(tetramethylen-adipamid), Poly-(tetramethylen-adipinsäurediamid), Nylon^{®} 4/6, Fa. DuPont), Polyamid 6 (Polycaprolactam, Poly-6-aminohexansäure, Nylon^{®}6, Fa. DuPont, Akulon^{®} K122, Fa. DSM; Zytel^{®} 7301, Fa. DuPont; Durethan^{®} B 29, Fa. Bayer), Polyamid 6/6 ((Poly(N,N'-hexamethyleneadipinediamid), Nylon^{®}6/6 , Fa. DuPont , Zytel^{®} 101, Fa. DuPont; Durethan^{®} A30, Durethan^{®} AKV, Durethan^{®} AM, Fa. Bayer; Ultramid^{®} A3, Fa BASF), Polyamid 6/9 (Poly(hexamethylen nonanediamid), Nylon^{®} 6/9 , Fa. DuPont), Polyamid 6/10 (Poly(hexamethylen sebacamid), Nylon^{®} 6/10 , Fa. DuPont), Polyamid 6/12 (Poly(hexamethylene dodecanediamid), Nylon^{®} 6/12 , Fa. DuPont), Polyamid 6/66 (Poly(hexamethylene adipamide-co-caprolactam), Nylon^{®} 6/66, Fa. DuPont), Polyamid 7 (Poly-7-aminoheptansäure, Nylon^{®} 7, Fa. DuPont), Polyamid 7,7 (Polyheptamethylenpimelamid, Nylon^{®} 7,7, Fa. DuPont), Polyamid 8 (Poly-8-aminooctansäure, Nylon^{®} 8, Fa. DuPont), Polyamid 8,8 (Polyoctamethylensuberamid, Nylon^{®} 8,8, Fa. DuPont), Polyamid 9 (Poly-9-aminononansäure, Nylon^{®} 9, Fa. DuPont), Polyamid 9,9 (Polynonamethylenazelamid, Nylon^{®} 9,9, Fa. DuPont), Polyamid 10 (Poly-10-amino-decansäure, Nylon^{®} 10, Fa. DuPont), Polyamid 10,9 (Poly(decamethylenazelamid), Nylon^{®} 10,9, Fa. DuPont), Polyamid 10,10 (Polydecamethylensebacamid, Nylon^{®} 10,10, Fa. DuPont), Polyamid 11 (Poly-11-aminoundecansäure, Nylon^{®} 11, Fa. DuPont), Polyamid 12 (Polylauryllactam, Nylon^{®} 12 , Fa. DuPont, Grillamid^{®} L20, Fa. Ems Chemie), aromatische Polyamide ausgehend von m-Xylol, Diamin und Adipinsäure; Polyamide, hergestellt aus Hexamethylendiamin und Iso- und/oder Terephthalsäure (Polyhexamethylenisophthalamid Polyhexamethylenterephthalamid) und gegebenenfalls einem Elastomer als Modifikator, z. B. Poly-2,4,4-trimethylhexamethylenterephthalamid oder Poly-m-phenylenisophthalamid.

Blockcopolymere der vorstehend genannten Polyamide mit Polyolefinen, Olefin-Copolymeren, lonomeren oder chemisch gebundenen oder gepfropften Elastomeren; oder mit Polyethern, wie z. B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

Eingesetzt werden können auch aromatische Polyamide wie PA4T, PA6T, PA9T, PA10T, PA11T und/oder MXD6, amorphe Polyamide wie 6I/X und TPE-A "rigid" und "soft".

Bevorzugt handelt es sich bei den Polymeren um Polyharnstoffe, Polyimide, Polyamidimide, Polyetherimide, Polyesterimide, Polyhydantoine und Polybenzimidazole.

Bevorzugt handelt es sich bei den Polymeren um Polyester, die sich von Dicarbonsäuren und Dialkoholen und/oder von Hydroxycarbonsäuren oder den entsprechenden Lactonen ableiten, wie Polyethylenterephthalat, Polybutylenterephthalat (Celanex^{®} 2500, Celanex^{®} 2002, Fa Celanese; Ultradur^{®}, FA. BASF), Poly-1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester.

Bevorzugt handelt es sich bei den Polymeren um Polycarbonate, Polyestercarbonate, Polysulfone, Polyethersulfone und Polyetherketone.

Bevorzugt handelt es sich bei den duroplastischen Polymeren um Formaldehyd-, Epoxid-, Melamin- Phenolharz-Polymere und/oder Polyurethane.

Bevorzugt handelt es sich bei den duroplastischen Polymeren um Epoxidharze.

Bevorzugt handelt es sich bei den duroplastischen Polymeren um Epoxidharze, die mit Resolen, Phenolen, Phenolderivaten und/oder Dicyandiamid, Alkoholen und Aminen gehärtet sind.

Bevorzugt handelt es sich bei den Epoxidharzen um Polyepoxidverbindungen.

Bevorzugt stammen die Epoxidharze aus der Gruppe der Novolacke und der Bisphenol A Harze.

Bevorzugt handelt es sich bei dem duroplastischen Polymer um ungesättigte Polyesterharze, Dicyclopentadien-modifizierte ungesättigte Polyester, Polyphenylenether oder Butadien-Polymere; um Block-Copolymere mit einem Polybutadien- oder Polyisopren-Block und einem Block aus Styrol oder alpha-Methylstyrol; um Block-Copolymere mit einem ersten Polybutadien-Block und einem zweiten Polyethylen-Block oder Ethylen-Propylen-Block, um Block-Copolymere mit einem ersten Polyisopren-Block und einem zweiten Polyethylen- oder Ethylen-Propylen-Block.

Bevorzugt handelt es sich bei dem duroplastischen Polymer um ein solches, dass auf epoxidierten pflanzlichen Ölen (epoxidiertes Soyabohnen- /Leinsamenöl), Acrylsäurederivaten (Acrylsäure, Crotonsäure, Isocrotonsäure, Methacrylsäure, Cinnamsäure, Maleinsäure, Fumarsäure, Methylmethacrylsäure) und Hydroxyalkyl-Acrylaten und/oder Hydoxyalkyl-Alkylcrylaten (Hydroxyethylmethacrylat, Hydroxypropyl-methacrylat, Hydroxybutylmethacrylat, Polyethylenglycolmethacrylat) basiert.

Bevorzugt finden die duroplastischen Polymere in elektrischen Schalterteilen, Bauteilen in Automobilbau, Elektrotechnik, Elektronik, Leiterplatten, Prepregs, Vergussmassen für elektronische Bauteile, im Boots- und Rotorblattbau, in GFK-Außenanwendungen, Haushalts- und Sanitäranwendungen, Engineering-Werkstoffen und weiteren Produkten Anwendung.

Bevorzugt handelt es sich bei den duroplastischen Polymeren um ungesättigte Polyesterharze (UP-Harze), die sich von Copolyestern gesättigter und ungesättigter, mehrwertiger insbesondere Dicarbonsäuren oder deren Anhydride mit mehrwertigen Alkoholen, sowie Vinylverbindungen als Vernetzungsmittel ableiten.

UP-Harze werden gehärtet durch radikalische Polymerisation mit Initiatoren (z. B. Peroxiden) und Beschleunigern.

Ungesättigte Polyester können die Estergruppe als Verbindungsglied in der Polymerkette enthalten.

Bevorzugte ungesättigte Dicarbonsäuren und -derivate zur Herstellung der Polyester sind Maleinsäure, Maleinsäureanhydrid und Fumarsäure, Itaconsäure, Citraconsäure, Mesaconsäure. Diese können abgemischt sein mit bis zu 200 Mol-%, bezogen auf die ungesättigten Säurekomponenten, mindestens einer aliphatischen gesättigten oder cycloaliphatischen Dicarbonsäure.

Bevorzugte gesättigte Dicarbonsäuren sind Phthalsäure, Isophthalsäure, Terephthalsäure, Dihydrophthalsäure, Tetrahydrophthalsäure, Hexahydrophthalsäure, Endomethylentetrahydrophthalsäure, Adipinsäure, Bernsteinsäure, Sebacinsäure, Glutarsäure, Methylglutarsäure, Pimelinsäure.

Bevorzugte mehrwertige, insbesondere zweiwertige, gegebenenfalls ungesättigte Alkohole sind die üblichen acyclische oder cyclische Gruppen aufweisenden Alkandiole und Oxaalkandiole.

Bevorzugte mit ungesättigten Polyestern copolymerisierbare ungesättigte Monomere tragen bevorzugt Vinyl-, Vinyliden- oder Allylgruppen, z. B. bevorzugt Styrol, aber auch beispielsweise kernalkylierte bzw. -alkenylierte Styrole, wobei die Alkylgruppen 1 - 4 Kohlenstoffatome enthalten können, z. B. Vinyltoluol, Divinylbenzol, alpha-Methylstyrol, tert.- Butylstyrol; Vinylester von Carbonsäuren mit 2 - 6 Kohlenstoffatomen, bevorzugt Vinylacetat, Vinylpropionat, Vinylbenzoat; Vinylpyridin, Vinylnaphthalin, Vinylcyclohexan, Acrylsäure und Methacrylsäure und/oder ihre Ester (vorzugsweise Vinyl-, Allyl und Methallylester) mit 1 - 4 Kohlenstoffatomen in der Alkoholkomponente, ihre Amide und Nitrile, Maleinsäureanhydrid, -halb- und -diester mit 1 - 4 Kohlenstoffatomen in der Alkoholkomponente, -halb- und -diamide oder cyclische Imide wie Butylacrylat, Methylmethacrylat, Acrylnitril, N-Methylmaleinimid oder N-Cyclohexylmaleinimid; Allylverbindungen wie Allylbenzol und Allylester wie Allylacetat, Phthalsäurediallylester, Isophthalsäurediallylester, Fumarsäurediallyl-ester, Allylcarbonate, Diallylphthallate, Diallylcarbonate, Triallylphosphat und Triallylcyanurat.

Bevorzugte Vinylverbindung zur Vernetzung ist Styrol.

Bevorzugte ungesättigte Polyester können die Estergruppe auch in der Seitenkette tragen wie z. B. Polyacrylester und Polymethacrylester.

Bevorzugte Härtersysteme sind Peroxide und Beschleuniger.

Bevorzugte Beschleuniger sind Metallcoinitiatoren und aromatische Amine und/oder UV-Licht und Photosensibilisatoren, z. B. Benzoinether sowie Azokatalysatoren wie Azoisobutyronitril, Mercaptane wie Laurylmercaptan, Bis-(2-ethylhexyl)sulfid und Bis-(2-mercaptoethyl)sulfid.

Ein Verfahren zur Herstellung von flammgeschützten Copolymerisaten ist dadurch gekennzeichnet, dass man mindestens ein ethylenisch ungesättigtes Dicarbonsäureanhydrid, abgeleitet von mindestens einer C₄-C₈-Dicarbonsäure, mindestens eine vinylaromatische Verbindung und mindestens einem Polyol copolymerisiert und dann mit den erfindungsgemäßen Flammschutzmittelmischungen umsetzt.

Bevorzugt einsetzbar sind Dicyclopentadien-modifizierte ungesättigte Polyester, die durch Reaktion von Dicyclopentadien, Maleinsäureanhydrid, Wasser, gesättigter Alkohol und gegebenenfalls einer weiteren mehrwertige Säure erhalten werden. Der Polyester wird mit einem radikalisch polymerisierbaren Monomer wie Styrol zum Harz vernetzt.

Bevorzugt handelt es sich bei den Polymeren um vernetzte Polymere, die sich von Aldehyden bzw. von Phenolen, Harnstoff oder Melamin ableiten, wie Phenol-Formaldehyd-, Harnstoff-Formaldehyd- und Melamin-Formaldehydharze.

Bevorzugt handelt es sich bei den Polymeren um vernetzbare Acrylharze, die sich von substituierten Acrylsäureestern ableiten, wie z. B. von Epoxyacrylaten, Urethanacrylaten oder Polyesteracrylaten.

Bevorzugt handelt es sich bei den Polymeren um Alkydharze, Polyesterharze und Acrylatharze, die mit Melaminharzen, Harnstoffharzen, Isocyanaten, Isocyanuraten, Polyisocyanaten oder Epoxidharzen vernetzt sind.

Bevorzugt handelt es sich bei den Polymeren um vernetzte Epoxidharze, die sich von aliphatischen, cycloaliphatischen, heterocyclischen oder aromatischen Glycidylverbindungen ableiten, z. B. Produkte von Bisphenol-A-diglycidylethern, Bisphenol-F-diglycidylethern, die mittels üblichen Härtern wie z. B. Anhydriden oder Aminen mit oder ohne Beschleunigern vernetzt werden.

Bevorzugte Duroplasten sind Polymere aus der Klasse der Cyanatester, Cyanatester/Bismaleimid-Copolymer, Bismaleimid-Triazin-Epoxy-Blends und Butadien-Polymere.

Bevorzugte Butadien-Polymere sind Blockcopolymere, die 70 - 95 Gew.-% ein oder mehrerer Monovinylsubstitutierter aromatischer Kohlenwasserstoffverbindung mit 8 - 18 C-Atomen und 30 - 5 % Gew.-% eines oder mehrerer konjugierter Diene mit 4 - 12 C-Atomen und wahlweise Vernetzer enthalten.

Bevorzugt werden die erfindungsgemäße Flammschutzmittelmischungen auch in Harzsystemen verwendet, die aus Polybutadien- oder Polyisopren-Harzen oder Mischungen derselben mit ungesättigten Butadien- oder Isopren-enthaltenden Polymeren bestehen, die an einer Vernetzung teilnehmen können.

Bevorzugt handelt es sich bei den Polymeren um vernetzte Epoxidharze, die sich von aliphatischen, cycloaliphatischen, heterocyclischen oder aromatischen Glycidylverbindungen ableiten, z. B. von Bisphenol-A-diglycidylethern, Bisphenol-F-di-glycidylethern, die mittels üblichen Härtern und/oder Beschleunigern vernetzt werden.

Geeignete Glycidylverbindungen sind Bisphenol-A-diglycidylester, Bisphenol-F-diglycidylester, Polyglycidylester von Phenol-Formaldehydharzen und Kresol-Formaldehydharzen, Polyglycidylester von Pththal-, Isophthal- und Terephthalsäure sowie von Trimellithsäure, N-Glycidylverbindungen von aromatischen Aminen und heterocyclischen Stickstoffbasen sowie Di- und Polyglycidylverbindungen von mehrwertigen aliphatischen Alkoholen.

Geeignete Härter sind aliphatische, cycloaliphatische, aromatische und heterocyclische Amine oder Polyamine wie Ethylendiamin, Diethylentriamin Triethylentetramin, Propan-1,3-diamin, Hexamethylendiamin, Aminoethylpiperazin, Isophorondiamin, Polyamidoamin, Diaminodiphenylmethan, Diaminodiphenylether, Diaminodiphenolsulfone, Anilin-Formaldehyd-Harze, 2,2,4-Trimethylhexan-1,6-diamin, m-Xylylendiamin, Bis(4-aminocyclohexyl)methan, 2,2-Bis(4-aminocyclohexyl)propan, 3-Aminomethyl-3,5,5-trimethylcyclohexylamin (Isophorondiamin), Polyamidoamine, Cyanguanidin und Dicyandiamid, ebenso mehrbasige Säuren oder deren Anhydride wie z. B. Phthalsäureanhydrid, Maleinsäureanhydrid, Tetrahydrophthalsäureanhydrid, Methyltetrahydrophthalsäureanhydrid, Hexahydrophthalsäureanhydrid und Methylhexahydrophthalsäureanhydrid sowie Phenole wie z. B. Phenol-Novolak-Harz, Cresol-Novolak-Harz, Dicyclopentadien-Phenol-Addukt-Harz, Phenolaralkyl-Harz, Cresolaralkyl-Harz, Naphtholaralkyl-Harz, Biphenol-modifiziertes Phenolaralkyl-Harz, Phenoltrimethylolmethan-Harz, Tetraphenylolethan-Harz, Naphthol-Novolak-Harz, Naphthol-Phenol-Kocondensat-Harz, Naphthol-Cresol-Kocondensat-Harz, Biphenol- modifiziertes Phenol-Harz und Aminotriazinmodifiziertes Phenol-Harz. Alle Härter können alleine oder in Kombination miteinander eingesetzt werden.

Geeignete Katalysatoren bzw. Beschleuniger für die Vernetzung bei der Polymerisation sind tertiäre Amine, Benzyldimethylamin, N-Alkylpyridine, Imidazol, 1-Methylimidazol, 2-Methylimidazol, 2-Ethyl-4-methylimidazol, 2-Ethyl-4-methylimidazol, 2-Phenylimidazol, 2-Heptadecylimidazol, Metallsalze organischer Säuren, Lewis Säuren und Amin-Komplex-Salze.

Bevorzugt handelt es sich bei den Polymeren um vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze. Bevorzugt handelt es sich bei den Polymeren um vernetzbare Acrylharze, die sich von substituierten Acrylsäureestern ableiten, wie z. B. von Epoxyacrylaten, Urethanacrylaten oder Polyesteracrylaten.

Bevorzugte Polyester-Polyole werden durch Polykondensation eines Polyalkoholes wie Ethylenglykol, Diethylenglykol, Propylenglykol, 1,4-Butandiol, 1,5-Pentandiol, Methylpentandiol, 1,6-Hexandiol, Trimethylolpropan, Glycerin, Pentaerythritol, Diglycerol, Traubenzucker und/oder Sorbit, mit einer dibasischen Säure wie Oxalsäure, Malonsäure, Bernsteinsäure, Weinsäure, Adipinsäure, Sebacinsäure, Maleinsäure, Fumarsäure, Phthalsäure und/oder Terephthalsäure erhalten. Diese Polyester-Polyole können alleine oder in Kombination benutzt werden.

Geeignete Polyisocyanate sind aromatische, alicyclische und/oder aliphatische Polyisocyanate mit nicht weniger als zwei Isocyanat-Groupen und Mischungen davon. Bevorzugt sind aromatische Polyisocyanate wie Tolyldiisocyanat, Methylendiphenyldiisocyanat, Naphthylendiisocyanate, Xylylendiisocyanat, Tris-4-isocyanatophenylmethan und Polymethylenpolyphenylendiisocyanate; alicyclische Polyisocyanate wie Methylendiphenyldiisocyanat, Tolyldiisocyanat; aliphatische Polyisocyanate und Hexamethylendiisocyanat, Isophorendiisocyanat, Demeryldiisocyanat, 1,1 -Methylenbis(4-isocyanatocyclohexan-4,4'-Diisocyanatodicyclohexylmethan-Isomerengemisch, 1,4-Cyclohexyldiisocyanat, Desmodur^{®}-Typen (Bayer) und Lysindiisocyanat und Mischungen davon.

Geeignete Polyisocyanate sind modifizierte Produkte, die durch Reaktion von Polyisocyanat mit Polyol, Harnstoff, Carbodiimid und/oder Biuret erhalten werden.

Bevorzugt handelt es sich bei den Polymeren um ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

Bevorzugt handelt es sich bei den Polymeren um vernetzbare Acrylharze, die sich von substituierten Acrylsäureestern ableiten, wie z. B. von Epoxyacrylaten, Urethanacrylaten oder Polyesteracrylaten.

Bevorzugt handelt es sich bei den Polymeren um Mischungen (Polyblends) der vorgenannten Polymeren, wie z. B. PP/EPDM (Polypropylen/ Ethylen-Propylen-Dien-Kautschuk), Polyamid/EPDM oder ABS (Polyamid/Ethylen-Propylen-DienKautschuk oder Acrylnitril-Butadien-Styrol), PVC/EVA (Polyvinylchlorid/ Ethylenvinylacetat), PVC/ABS (Polyvinylchlorid/Acrylnitril-Butadien-Styrol), PVC/MBS (Polyvinylchlorid/ Methacrylat-Butadien-Styrol), PC/ABS (Polycarbonat/Acrylnitril-Butadien-Styrol), PBTP/ABS (Polybutylenterephthalat /Acrylnitril-Butadien-Styrol), PC/ASA (Polycarbonat/Acrylester-Styrol-Acrylnitril), PC/PBT (Polycarbonat/Polybutylen-terephthalat), PVC/CPE (Polyvinylchlorid/chloriertes Polyethylen), PVC/Acrylate (Polyvinylchlorid/Acrylate, POM/thermoplastisches PUR (Polyoxymethylen / thermoplastisches Polyurethan), PC/thermoplastisches PUR (Polycarbonat / thermoplastisches Polyurethan), POM/Acrylat (Polyoxymethylen/Acrylat), POM/MBS (Polyoxymethylen/ Methacrylat-Butadien-Styrol), PPO/HIPS (Polyphenylenoxid /High impact polystyrol), PPO/PA 6.6 (Polyphenylenoxid /Polyamid 6.6) und Copolymere, PA/HDPE (Polyamid /High Density Polyethylen), PA/PP (Polyamid / Polyethylen), PA/PPO (Polyamid / Polyphenylenoxid), PBT/PC/ABS (Polybutylenterephthalat / Polycarbonat / Acrylnitril-Butadien-Styrol) und/ oder PBT/PET/PC (Polybutylenterephthalat / Polyethylenterephthalat / Polycarbonat).

Bevorzugt weist die hergestellte Formmasse eine rechteckige Form mit regelmäßiger oder unregelmäßiger Grundfläche, Würfelform, Quaderform, Kissenform, Prismenform auf.

Die erfindungsgemäßen Flammschutzmittelmischungen können auch in Elastomeren wie etwa Nitrilkautschuk, Nitrilkautschuk mit Carboxyl-Gruppen und Carboxyl-terminierten Butadien-Acrylnitril, Chloropren-Kautschuk, Butadien-Kautschuk, Acrylnitril-Butadien-Kautschuk, Styrol-Butadien-Kautschuk, Butadien-Kautschuk mit Acrylharz und thermoplastischem Polyimid, urethanmodifiziertes Copolyesterpolymer und anderen Elastomeren eingesetzt werden.

Bevorzugte weitere Additive in den erfindungsgemäßen Flammschutzmittel-Mischungen sind aus der Gruppe der Carbodiimide und/oder (Poly-)isocyanate.

Bevorzugte weitere Additive kommen aus der Gruppe der sterisch gehinderten Phenole (z. B. Hostanox^{®} OSP 1), sterisch gehinderten Amine und Lichtstabilisatoren (z. B. Chimasorb^{®} 944, Hostavin^{®}-Typen), Phosphonite und Antioxidantien (z. B. Sandostab^{®} PEPQ der Fa. Clariant) und Trennmittel (Licomont^{®}-Typen der Fa. Clariant).

Bevorzugte Füllstoffe in den erfindungsgemäßen Flammschutzmittel-Mischungen sind Sauerstoffverbindungen des Siliciums, Magnesiumverbindungen, z. B. Metallcarbonate von Metallen der zweiten Hauptgruppe des Periodensystems, Magnesiumoxid, Magnesiumhydroxid, Hydrotalcite, Dihydrotalcit, Magnesium-Carbonate oder Magnesium-Calcium-Carbonate, Calciumverbindungen, z. B. Calciumhydroxid, Calciumoxid, Hydrocalumit, Aluminiumverbindungen, z. B. Aluminiumoxid, Aluminiumhydroxid, Böhmit, Gibbsit oder Aluminiumphosphat, roter Phosphor, Zink- und/oder Aluminiumverbindungen.

Bevorzugte weitere Füllstoffe sind Glaskugeln.

Glasfasern werden bevorzugt als Verstärkungsstoffe eingesetzt.

Erfindungsgemäß einsetzbare Compoundieraggregate sind Mehrzonenschnecken-Extruder mit Dreizonenschnecken und/oder Kurzkompressionsschnecken.

Erfindungsgemäß einsetzbare Compoundieraggregate sind auch Ko-Kneter z. B. von Fa. Coperion Buss Compounding Systems, CH-Pratteln, z. B. MDK/E46-11D und/oder Laborkneter (MDK 46 der Firma Buss, Schweiz mit L=11D).

Erfindungsgemäß einsetzbare Compoundieraggregate sind Doppelschneckenextruder z. B. der Fa. Coperion Werner & Pfleiderer GmbH & Co.KG, Stuttgart (ZSK 25, ZSK30, ZSK 40, ZSK 58, ZSK MEGAcompounder 40, 50, 58, 70, 92, 119, 177, 250, 320, 350, 380) und/oder der Fa. Berstorff GmbH, Hannover, Leistritz Extrusionstechnik GmbH, Nürnberg.

Erfindungsgemäß einsetzbare Compoundieraggregate sind Ring-Extruder z. B. der Fa. 3+Extruder GmbH, Laufen mit einem Ring von drei bis zwölf kleinen Schnecken, die um einem statischen Kern rotieren und/oder Planetwalzenextruder z. B. der Fa. Entex, Bochum und/oder Entgasungs-Extruder und/oder Kaskadenextruder und/oder Maillefer-Schecken.

Erfindungsgemäß einsetzbare Compoundieraggregate sind Compounder mit gegenläufiger Doppelschnecke z. B. Compex 37- bzw. -70-Typen der Fa. Krauss-Maffei Berstorff.

Erfindungsgemäße wirksame Schneckenlängen (L) sind bei Einwellenextrudern bzw. Einschneckenextrudern 20 bis 40D; bei Doppelschneckenextrudern 8 bis 48D und bei Mehrzonenschneckenextudern z. B. 25D mit Einzugzone (L=10D), Übergangszone (L=6D) und Ausstoßzone (L=9D).

Die Erfindung betrifft zudem die Verwendung der erfindungsgemäßen Flammschutzmittelmischung nach einem oder mehreren der Ansprüche 1 bis 10 in oder für Steckverbinder, stromberührten Teilen in Stromverteilern (FI-Schutz), Platinen, Vergußmassen, Stromsteckern, Schutzschaltern, Lampengehäuse, LED Gehäuse, Kondensatorgehäuse, Spulenkörper und Ventilatoren, Schutzkontakte, Stecker, in/auf Platinen, Gehäuse für Stecker, Kabel, flexible Leiterplatten, Ladekabel für Handys, Motorabdeckungen, Textilbeschichtungen und anderen Produkten.

Hierzu gehören Formkörper in Form von Bauteilen für den Elektro/Elektronikbereich, insbesondere für Teile von Leiterplatten, Gehäusen, Folien, Leitungen, Schaltern, Verteilern, Relais, Widerständen, Kondensatoren,
Spulen, Lampen, Dioden, LED, Transistoren, Konnektoren, Reglern, Speichern und Sensoren, in Form von großflächigen Bauteilen, insbesondere von Gehäuseteilen für Schaltschränke und in Form aufwendig gestalteter Bauteile mit anspruchsvoller Geometrie.

Bevorzugt beträgt bei solchen Formkörpern die Wandstärke weniger als 0,5 mm, kann aber auch mehr als 1,5 mm (bis zu 10 mm) betragen. Besonders geeignet sind weniger als 1,5 mm, mehr bevorzugt weniger als 1 mm und besonders bevorzugt weniger als 0,5 mm

Die erfindungsgemäße Flammschutzmittelmischung wird bevorzugt mit Glasfasern mit einem arithmetischen Mittel der Länge von 100 bis 220 µm zur Herstellung von flammgeschützten Polyamidformmassen und/oder Formteilen eingesetzt, wobei , der Herstellungsprozess für die Polyamidformmasse bzw. das Formteil so eingestellt wird, dass in der resultierenden Polyamidformmasse bzw. dem Formteil die Glasfasern ein arithmetisches Mittel der Länge im Bereich von 100 bis 220 µm aufweisen und wobei die Polyamidformmasse bzw. das Formteil bevorzugt nach IEC 60695-11-10 der (UL94) als V-0 klassifiziert ist.

Herstellung, Verarbeitung und Prüfung von flammgeschützten PolymerFormmassen und Polymer-Formkörpern.

Die Flammschutzmittelkomponenten werden mit dem Polymergranulat und evtl. Additiven vermischt und über den Seiteneinzug eines Doppelschnecken-Extruders (Typ Leistritz ZSE 27/44D) bei Temperaturen von 230 bis 260 °C (glasfaserverstärktes PBT), 260 - 310 °C in PA 6.6 bzw. bei 250 - 275 °C in PA 6 eingearbeitet. Die Glasfasern wurden über einen zweiten Seiteneinzug zugegeben. Der homogenisierte Polymerstrang wurde abgezogen, im Wasserbad gekühlt und anschließend zu flammgeschützten Polymerformmassen granuliert.

Nach ausreichender Trocknung wurden die Formmassen auf einer Spritzgießmaschine (Typ Arburg 320 C Allrounder) bei Massetemperaturen von 240 bis 300 °C zu flammgeschützten Polymer-Formkörper verarbeitet. Diese können als Prüfkörper verwendet und anhand des UL 94-Tests (Underwriter Laboratories) auf Flammwirdrigkeit geprüft und klassifiziert werden.

Bestimmung des Verarbeitungsfensters von PA-GF30-Compound im isothermen DSC-Test:
Entsprechend der vorgenannten allgemeinen Vorschrift werden flammgeschützte Polymerformmassen und flammgeschützte Polymerformkörper hergestellt. Die Zusammensetzung ist 49,7 Gew.-% Polyamid (Ultramid^{®} A 27 E 01 der Fa. BASF SE), 30 Gew.-% Glasfasern (PPG Glasfaser HP 3610 EC10 der Fa. PPG), 12,6 Gew.-% erfindungsgemäße Flammschutzmittelmischung entsprechend der Beispiele, 6,6 Gew.-% Melaminpolyphosphat (MPP) (Melapur^{®} 200/70 der Fa. BASF, 0,8 Gew.-% Zinkborat (^{®}Firebrake 500 der Fa. Rio Tinto Minerals), 0,3 Gew.-% Wachs (Licowax^{®} E Gran der Fa. Clariant).

Da die untere Grenze des Verarbeitungsfensters nicht beeinflusst wird, wird als Maß für das Verarbeitungsfenster die Zersetzung der flammgeschützte Polymerformmasse an der oberen Grenze bestimmt. Dazu dient der Gewichtsverlust bei einer definierten Temperatur.

Mit DSC (Differentialthermoanalyse) wird an Luft nach 60 min Haltezeit der Gewichtsverlust bei 330 °C in Gew.-% bestimmt.

Die Rieselfähigkeit der erfindungsgemäßen Flammschutzmittelmischung wird nach Pfrengle (DIN ISO 4324 Tenside, Pulver und Granulate, Bestimmung des Schüttwinkels, Dez. 1983, Beuth Verlag Berlin) bestimmt.

Die vorgenannte Rieselfähigkeit wird durch die Ermittlung der Höhe des Kegels eines Pulvers oder Granulates beziehungsweise des Verhältnisses von Kegelradius zu Kegelhöhe bestimmt. Der Kegel wird erzeugt, indem eine spezielle Menge der zu untersuchenden Substanz in einer definierten Apparatur durch einen speziellen Trichter ausgeschüttet wird. Der definierte Kegelradius wird erzeugt, indem der Kegel aufgeschüttet wird, bis das Produkt über eine vom Untergrund erhabene kreisrunde Platte überfließt. Der Radius der Platte ist festgelegt. Der Trichter hat einen Innendurchmesser von 10 mm. Die Platte hat einen Radius von 50 mm. Es werden 5Bestimmungen durchgeführt und gemittelt. Die Höhe wird in Millimeter mit einer Messleiste von der Platte ausgehend, zum Scheitel des Kegels ausgemessen. Das Verhältnis von Kegelradius (50 mm) zu Kegelhöhe wird aus dem Mittelwert berechnet.

An einer Flammschutzmittelmischung nach dem Stand der Technik wurden Schüttkegelhöhen von 29,9 bis 49,9 mm entsprechend einer Spanne von 20 mm bestimmt und Verhältnisse von Radius zu Höhe (=cot alpha) von 1,67 bis 1,00 entsprechend einer Spanne von 0,67.

An Prüfkörpern aus jeder Mischung wurden die Brandklasse UL 94 (Underwriter Laboratories) an Probekörpern der Dicke 1,5 mm bestimmt.

Nach UL 94 ergeben sich folgende Brandklassen:
- V-0: kein Nachbrennen länger als 10 sec, Summe der Nachbrennzeiten bei 10 Beflammungen nicht grösser als 50 sec, kein brennendes Abtropfen, kein vollständiges Abbrennen der Probe, kein Nachglühen der Proben länger als 30 sec nach Beflammungsende
- V-1: kein Nachbrennen länger als 30 sec nach Beflammungsende, Summe der Nachbrennzeiten bei 10 Beflammungen nicht grösser als 250 sec, kein Nachglühen der Proben länger als 60 sec nach Beflammungsende, übrige Kriterien wie bei V-0
- V-2: Zündung der Watte durch brennendes Abtropfen, übrige Kriterien wie bei V-1

Nicht klassifizierbar (nkl) erfüllt nicht die Brandklasse V-2.

Bei den nachfolgenden Beispielen wird die thermische Beständigkeit jeweils an der erfindungsgemäßen Flammschutzmittelmischung und das Verarbeitungsfenster an der flammgeschützten polymeren Formmasse bestimmt.

### Herstellung, Verarbeitung und Prüfung von flammgeschützten PolymerFormmassen und Polymer -Formkörper

Die Flammschutzmittelkomponenten werden mit dem Polymergranulat und evtl. Additiven vermischt und über den Seiteneinzug eines Doppelschnecken-Extruders (Typ Leistritz ZSE 27/44D) bei Temperaturen von 230 bis 260 °C (glasfaserverstärktes PBT), 260 - 310 °C in PA 6.6 bzw. bei 250 - 275 °C in PA 6 eingearbeitet. Die Glasfasern wurden über einen zweiten Seiteneinzug zugegeben. Der homogenisierte Polymerstrang wurde abgezogen, im Wasserbad gekühlt und anschließend zu flammgeschützten Polymerformmassen granuliert.

Nach ausreichender Trocknung wurden die Formmassen auf einer Spritzgießmaschine (Typ Arburg 320 C Allrounder) bei Massetemperaturen von 240 bis 300 °C zu flammgeschützten Polymer-Formkörper verarbeitet. Sie können als Prüfkörper verwendet und anhand des UL 94-Tests (Underwriter Laboratories) auf Flammwidrigkeit geprüft und klassifiziert werden.

### Bestimmung des Verarbeitungsfensters von PA-GF30-Compound im isothermen DSC-Test

Entsprechend der allgemeinen Vorschrift werden flammgeschützte Polymerformmassen und flammgeschützte Polymerformkörper hergestellt. Die Zusammensetzung ist 49,7 Gew.-% Polyamid (Ultramid A 27 E 01 der Fa. BASF SE), 30 Gew.-% Glasfasern (PPG Glasfaser HP 3610 EC10 der Fa. PPG), 12,6 Gew.-% erfindungsgemäße FSM-Mischung entsprechend der Beispiele, 6,6 Gew.-% MPP (Melapur 200/70 der Fa. BASF, 0,8 Gew.-% Zinkborat (Firebrake 500 der Fa. Rio Tinto Minerals), 0,3 % Wachs (Licowax E Gran der Fa. Clariant).

Da die untere Grenze des Verarbeitungsfensters nicht beeinflusst wird, wird als Maß für das Verarbeitungsfenster die Zersetzung der flammgeschützte Polymerformmasse an der oberen Grenze bestimmt. Dazu dient der Gewichtsverlust bei einer definierten Temperatur.

Mit DSC (Differentialthermoanalyse) wird an Luft nach nach 60 min Haltezeit der Gewichtsverlust bei 330 °C in Gew.-% bestimmt.

### Beispiel 1 (Vergleich)

Aluminiumdiethylphosphinat ohne Telomer und Eisen zeigt die in Tabelle 2 aufgeführte thermische Beständigkeit und Verarbeitungsfenster.

### Beispiel 2 und 4 (Referenzbeispiele)

Aluminiumdiethylphosphinate ohne Telomer werden mit Eisentris(diethylphosphinat) in einem Pflugscharmischer der Fa. Lödige zu physikalischen Mischungen gemischt, indem ca. 15 min gemischt wird bis Homogenität erreicht ist. Die erfindungsgemäßen Flammschutzmittelmischungen enthalten 20 bzw. 1000 ppm Eisen.

Die thermische Beständigkeit und das Verarbeitungsfenster (beide siehe Tabelle 2) sind reinem Aluminiumdiethylphosphinat (Tabelle 2, Vergleichsbeispiel 1) überlegen. Die thermische Beständigkeit wird an den erfindungsgemäßen Flammschutzmittelmischungen und das Verarbeitungsfenster an den flammgeschützten polymeren Formmassen bestimmt.

### Beispiele 3 und 5 (Referenzbeispiele)

Aluminiumdiethylphosphinat ohne Telomer wird mit Eisentris(dipropylphosphinat) in einem Pflugscharmischer der Fa. Lödige zu physikalischen Mischungen gemischt, indem ca. 15 min gemischt wird bis Homogenität erreicht ist. Die erfindungsgemäßen Flammschutzmittelmischungen enthalten 50 bzw. 13413 ppm Eisen.

### Die thermische Beständigkeit und das Verarbeitungsfenster (beide siehe

Tabelle 2) sind reinem Aluminiumdiethylphosphinat (Tabelle 2, Vergleichsbeispiel 1) überlegen. Die thermische Beständigkeit wird an den erfindungsgemäßen Flammschutzmittelmischungen und das Verarbeitungsfenster an den flammgeschützten polymeren Formmassen bestimmt.

### Beispiele 6 bis 17

Aluminiumdiethylphosphinat, das n-Butyl-Ethyl-Phosphinat, bzw. sec-Butyl-Ethyl-Phosphinat bzw. Ethyl-Hexyl-Phosphinat ionisch eingebaut enthält, wird mit Eisentris(diethylphosphinat) in einem Pflugscharmischer der Fa. Lödige ca. 15 min gemischt bis Homogenität erreicht ist. Die Einsatzmengen sind in Tabelle 3 beschrieben, die Zusammensetzung der erfindungsgemäßen Flammschutzmittelmischungen in Tabelle 4. Die thermische Beständigkeit und das Verarbeitungsfenster (beide siehe Tabelle 4) sind reinem Aluminiumdiethylphosphinat (Tabelle 2, Vergleichsbeispiel 1) überlegen. Die thermische Beständigkeit wird an den erfindungsgemäßen Flammschutzmittelmischungen und das Verarbeitungsfenster an der flammgeschützten polymeren Formmasse bestimmt.

### Beispiele 18 bis 19

Aluminiumdiethylphosphinat, das n-Butyl-Ethyl-Phosphinat ionisch eingebaut enthält wird mit Eisentris(dipropylphosphinat) in einem Pflugscharmischer der Fa. Lödige ca. 15 min gemischt bis Homogenität erreicht ist. Die Einsatzmengen sind in Tabelle 3 beschrieben, die Zusammensetzung der erfindungsgemäßen Flammschutzmittelmischungen in Tabelle 4.

Die thermische Beständigkeit und das Verarbeitungsfenster (beide siehe Tabelle 4) sind reinem Aluminiumdiethylphosphinat (Tabelle 2, Vergleichsbeispiel 1) überlegen. Die thermische Beständigkeit wird an den erfindungsgemäßen Flammschutzmittelmischungenund das Verarbeitungsfenster an der flammgeschützten polymeren Formmasse bestimmt.

### Beispiele 20 bis 35

Aluminiumdiethylphosphinate, die n-Butyl-Ethyl-Phosphinat, sec-Butyl-ethyl-phosphinat, bzw. Ethyl-n-hexyl-phosphinat ionisch eingebaut enthalten, werden in den in Tabellen 5 und 7 genannten Mengen mit Eisenzusätzen in einem Pflugscharmischer der Fa. Lödige ca. 15 min gemischt bis Homogenität erreicht ist. Die erfindungsgemäßen Flammschutzmittelmischungen enthalten die in den Tabelle 6 und 8 genannten Mengen n-Butyl-Ethyl-Phosphinat, sec-Butyl-ethyl-phosphinat, bzw. Ethyl-n-hexyl-phosphinat und Eisen.

Die thermische Beständigkeit und das Verarbeitungsfenster (beide siehe Tabellen 6 und 8) sind reinem Aluminiumdiethylphosphinat (Tabelle 2, Vergleichsbeispiel 1) überlegen. Die thermische Beständigkeit wird an den erfindungsgemäßen Flammschutzmittelmischungenund das Verarbeitungsfenster an der flammgeschützten polymeren Formmasse bestimmt.

### Beispiele 36 und 37

Aluminiumdiethylphosphinat, das n-Butyl-Ethyl-Phosphinat cogefällt enthält, wird mit Eisentris(diethylphosphinat) in einem Pflugscharmischer der Fa. Lödige ca. 15 min gemischt bis Homogenität erreicht ist. Die Einsatzmengen sind in Tabelle7 beschrieben, die Zusammensetzung der erfindungsgemäßen Flammschutzmittelmischungen in Tabelle 8.

Die thermische Beständigkeit und das Verarbeitungsfenster (beide siehe Tabelle 8) sind reinem Aluminiumdiethylphosphinat (Tabelle 2, Vergleichsbeispiel 1) überlegen. Die thermische Beständigkeit wird an den erfindungsgemäßen Flammschutzmittelmischungenund das Verarbeitungsfenster an der flammgeschützten polymeren Formmasse bestimmt.

### Beispiel 38

Aluminiumdiethylphosphinat, das sec-Butyl-ethyl-phosphinat ionisch eingebaut enthält wird zunächst mit Aluminiumtris-n-butylethylphosphinat und danach mit Eisentris(diethylphosphinat) in einem Pflugscharmischer der Fa. Lödige zu einer physikalischen Mischung gemischt, indem ca. 15 min gemischt wird bis Homogenität erreicht ist. Die erfindungsgemäße Flammschutzmittelmischung enthält 52 ppm Eisen.

Die thermische Beständigkeit und das Verarbeitungsfenster (beide siehe Tabelle 8) sind reinem Aluminiumdiethylphosphinat (Tabelle 2, Vergleichsbeispiel 1) überlegen. Die thermische Beständigkeit wird an der erfindungsgemäßen FSM-Mischung und das Verarbeitungsfenster an der flammgeschützten polymeren Formmasse bestimmt.

**Tabelle 1: Einsatzmengen bei den Flammschutzmittelmischungen [g] (R = Referenzbeispiele)**

| Beispiel | | 1 Vgl. | 2 (R) | 3 (R) | 4 (R) | 5 (R) | 6 | 7 | 8 | 9 | 10 |
|---|---|---|---|---|---|---|---|---|---|---|---|
| Aluminiumdiethylphosphinat [g] | | 1000,00 | 999,85 | 999,55 | 992,5 | 879,0 | 999,85 | 899,0 | 999,75 | 992,5 | 999,75 |
| erfindungsgemäße Eisenzusätze [g] | Eisentris(diethylphosphinat) | | 0,15 | | 7,5 | | 0,15 | 101 | 0,25 | 7,5 | 0,25 |
| | Eisentris(dipropylphosphinat) | | | 0,45 | | 121 | | | | | |
| | Eisendi(dibutylphosphinat) | | | | | | | | | | |
| | Eisentris(ethylphosphinat) | | | | | | | | | | |
| | Eisentris(hexylphosphinat) / Fe((C₆H₁₃)PO₂H)₃ | | | | | | | | | | |
| | Di-Eisen-tris(ethylphosphonat) / Fe₂(C₂H₅PO₃)₃ | | | | | | | | | | |
| | Eisentris(n-butyl-Ethylphosphinat) | | | | | | | | | | |
| | Eisenphosphit / Fe₂(HPO₃)₃ | | | | | | | | | | |
| | Eisen(III)phosphat / FePO₄ | | | | | | | | | | |
| | Eisen(II)phosphat / Fe₃(PO₄)₂ | | | | | | | | | | |
| Telomere [g] | Aluminium-n-butyl-ethyl-phosphinat | | | | | | | | | | |

**Tabelle 2: Analyse der FSM, Thermische Beständigkeit und Verarbeitungsfenster**

| Beispiel | | 1 Vgl. | 2 | 3 | 4 | 5 | 6 | 7 | 8 | 9 | 10 |
|---|---|---|---|---|---|---|---|---|---|---|---|
| Zusätze [Gew.-%] | | 0 | 0,02 | 0,05 | 0,76 | 14 | 0,02 | 11 | 0,03 | 0,76 | 0,03 |
| Telomergehalt [P-%] | n-Butyl-ethyl-phosphinat (als Al-Salz) | - | - | - | - | - | 0,05 | 0,05 | 0,5 | 0,5 | 10 |
| | sec-Butyl-ethyl-phosphinat (als Al-Salz) | - | - | - | - | - | - | - | - | - | - |
| | Ethyl-n-hexyl-phosphinat (als Al-Salz) | - | - | - | - | - | - | - | - | - | - |
| Fe-Gehalt [ppm] | | 0 | 20 | 50 | 1000 | 13413 | 20 | 13413 | 33 | 1000 | 33 |
| Therm. Beständ. [°C] | | 325 | 335 | 366 | 376 | 359 | 337 | 350 | 356 | 375 | 375 |
| Verarbeitungsfenster [%] | | 8 | 5 | 4,3 | 4,2 | 5,5 | 5 | 5,4 | 3,7 | 3,5 | 5,1 |

**Tabelle 3: Einsatzmengen bei den Flammschutzmittelmischungen [g]**

| Beispiel | | 11 | 12 | 13 | 14 | 15 | 16 | 17 | 18 | 19 | 20 |
|---|---|---|---|---|---|---|---|---|---|---|---|
| Aluminiumdiethylphosphinat [g] | | 992,5 | 999,85 | 899,0 | 999,85 | 992,5 | 999,85 | 992,5 | 999,7 | 991,0 | 999,85 |
| erfindungsgemäße Eisenzusätze [g] | Eisentris(diethylphosphinat) | 7,5 | 0,15 | 101 | 0,15 | 7,5 | 0,15 | 7,5 | | | |
| | Eisentris(dipropylphosphinat) | | | | | | | | 0,3 | 9 | |
| | Eisendi(dibutylphosphinat) | | | | | | | | | | 0,15 |
| | Eisentris(ethylphosphinat) | | | | | | | | | | |
| | Eisentris(hexylphosphinat) / Fe((C₆H₁₃)PO₂H)₃ | | | | | | | | | | |
| | Di-Eisen-tris(ethylphosphonat) / Fe₂(C₂H₅PO₃)₃ | | | | | | | | | | |
| | Eisentris(n-butyl-Ethylphosphinat) | | | | | | | | | | |
| | Eisenphosphit / Fe₂(HPO₃)₃ | | | | | | | | | | |
| | Eisen(III)phosphat / FePO₄ | | | | | | | | | | |
| | Eisen(II)phosphat / Fe₃(PO₄)₂ | | | | | | | | | | |
| Telomere [g] | Aluminium-n-butyl-ethyl-phosphinat | | | | | | | | | | |

**Tabelle 4: Analyse der FSM, Thermische Beständigkeit und Verarbeitungsfenster**

| Beispiel | | 11 | 12 | 13 | 14 | 15 | 16 | 17 | 18 | 19 | 20 |
|---|---|---|---|---|---|---|---|---|---|---|---|
| Zusätze [Gew.-%] | | 0,76 | 0,02 | 11 | 0,02 | 0,76 | 0,06 | 0,76 | 0,03 | 0,91 | 0,02 |
| Telomergehalt [P-%] | n-Butyl-ethyl-phosphinat (als Al-Salz) | 10 | 20 | 20 | - | - | - | - | 0,05 | 10 | |
| | sec-Butyl-ethyl-phosphinat (als Al-Salz) | - | - | - | 0,1 | 5 | - | - | - | - | 0,05 |
| | Ethyl-n-hexyl-phosphinat (als Al-Salz) | - | - | - | - | - | 0,1 | 10 | - | - | |
| Fe-Gehalt [ppm] | | 1000 | 20 | 13413 | 20 | 1000 | 20 | 1000 | 33 | 1000 | 20 |
| Therm. Beständ. [°C] | | 375 | 334 | 359 | 339 | 369 | 336 | 368 | 344 | 374 | 338 |
| Verarbeitungsfenster [%] | | 4,9 | 5,1 | 5,5 | 5,1 | 4,3 | 5,6 | 4,4 | 5,3 | 4,5 | 5,6 |

**Tabelle 5: Einsatzmengen bei den Flammschutzmittelmischungen [g]**

| Beispiel | | 21 | 22 | 23 | 24 | 25 | 26 | 27 | 28 | 29 | 30 |
|---|---|---|---|---|---|---|---|---|---|---|---|
| Aluminiumdiethylphosphinat [g] | | 992,5 | 999,85 | 994 | 999,7 | 995,5 | 999,84 | 992,2 | 999,8 | 991 | 999,87 |
| erfindungsgemäße Eisenzusätze [g] | Eisentris(diethylphosphinat) | | | | | | | | | | |
| | Eisentris(dipropylphosphinat) | | | | | | | | | | |
| | Eisendi(dibutylphosphinat) | 7,5 | | | | | | | | | |
| | Eisentris(ethylphosphinat) | | 0,15 | 6 | | | | | | | |
| | Eisentris(hexylphosphinat) / Fe((C₆H₁₃)PO₂H)₃ | | | | 0,3 | 4,5 | | | | | |
| | Di-Eisen-tris(ethylphosphonat) / Fe₂(C₂H₅PO₃)₃ | | | | | | 0,16 | 7,8 | | | |
| | Eisentris(n-butyl-Ethylphosphinat) | | | | | | | | 0,2 | 9 | |
| | Eisenphosphit / Fe₂(HPO₃)₃ | | | | | | | | | | 0,13 |
| | Eisen(III)phosphat / FePO₄ | | | | | | | | | | |
| | Eisen(II)phosphat / Fe₃(PO₄)₂ | | | | | | | | | | |
| Telomere [g] | Aluminium-n-butyl-ethyl-phosphinat | | | | | | | | | | |

**Tabelle 6: Analyse der FSM, Thermische Beständigkeit und Verarbeitungsfenster**

| Beispiel | | 21 | 22 | 23 | 24 | 25 | 26 | 27 | 28 | 29 | 30 |
|---|---|---|---|---|---|---|---|---|---|---|---|
| Zusätze [Gew.-%] | | 0,76 | 0,02 | 0,60 | 0,03 | 0,45 | 0,02 | 0,79 | 0,02 | 0,91 | 0,01 |
| Telomergehalt [P-%] | n-Butyl-ethyl-phosphinat (als Al-Salz) | | 0,05 | 10 | | | | | | | 0,05 |
| | sec-Butyl-ethyl-phosphinat (als Al-Salz) | 10 | | | | | 0,05 | 10 | 0,05 | 10 | |
| | Ethyl-n-hexyl-phosphinat (als Al-Salz) | | | | 0,05 | 5 | | | | | |
| Fe-Gehalt [ppm] | | 1021 | 25 | 1000 | 33 | 499 | 21 | 1000 | 22 | 999 | 21 |
| Therm. Beständ. [°C] | | 372 | 338 | 368 | 346 | 373 | 338 | 373 | 335 | 370 | 337 |
| Verarbeitungsfenster [%] | | 4,7 | 5,9 | 6,1 | 5,6 | 4,2 | 6 | 4,1 | 4,9 | 4,3 | 5,5 |

**Tabelle 7: Einsatzmengen bei den Flammschutzmittelmischungen [g]**

| Beispiel | | 31 | 32 | 33 | 34 | 35 | 36 | 37 | 38 |
|---|---|---|---|---|---|---|---|---|---|
| Aluminiumdiethylphosphinat [g] | | 993,7 | 999,94 | 997,3 | 999,85 | 993,6 | 999,85 | 992,5 | 981,61 |
| erfindungsgemäße Eisenzusätze [g] | Eisentris(diethylphosphinat) | | | | | | 0,15 | 7,5 | 0,39 |
| | Eisentris(dipropylphosphinat) | | | | | | | | |
| | Eisendi(dibutylphosphinat) | | | | | | | | |
| | Eisentris(ethylphosphinat) | | | | | | | | |
| | Eisentris(hexylphosphinat) / Fe((C₆H₁₃)PO₂H)₃ | | | | | | | | |
| | Di-Eisen-tris(ethylphosphonat) / Fe₂(C₂H₅PO₃)₃ | | | | | | | | |
| | Eisentris(n-butyl-Ethylphosphinat) | | | | | | | | |
| | Eisenphosphit / Fe₂(HPO₃)₃ | 6,3 | | | | | | | |
| | Eisen(III)phosphat / FePO₄ | | 0,06 | 2,7 | | | | | |
| | Eisen(II)phosphat / Fe₃(PO₄)₂ | | | | 0,15 | 6,4 | | | |
| Telomere [g] | Aluminium-n-butyl-ethyl-phosphinat | | | | | | | | 18 |

**Tabelle 8: Analyse der FSM, Thermische Beständigkeit und Verarbeitungsfenster**

| Beispiel | | 31 | 32 | 33 | 34 | 35 | 36 | 37 | 38 |
|---|---|---|---|---|---|---|---|---|---|
| Zusätze [Gew.-%] | | 0,63 | 0,01 | 0,27 | 0,02 | 0,64 | 0,02 | 0,76 | |
| Telomergehalt [P-%] | n-Butyl-ethyl-phosphinat (als Al-Salz) | 10 | | | | | 0,05 | 10 | 1,5 |
| | sec-Butyl-ethyl-phosphinat (als Al-Salz) | | 0,05 | 10 | | | | | 1,8 |
| | Ethyl-n-hexyl-phosphinat (als Al-Salz) | | | | 0,05 | 5 | | | |
| Fe-Gehalt [ppm] | | 1000 | 22 | 1000 | 23 | 1000 | 20 | 1000 | 52 |
| Therm. Beständ. [°C] | | 373 | 339 | 371 | 334 | 369 | 351 | 353 | 365 |
| Verarbeitungsfenster [%] | | 4,1 | 5 | 4,5 | 7 | 4,2 | 4,5 | 4,8 | 4,3 |

In den vorgenannten Tabellen wurde die thermische Beständigkeit mit Hilfe der Thermogravimetrie (TGA) gemessen. Die angegebene Temperatur ist die, bei der 2 Gew.-% Gewichtsverlust vorliegen.

Das Verarbeitungsfenster der Polymerformmasse wurde ebenfalls mit der TGA bestimmt. Gemessen wird dabei der Gewichtsverlust in Gew.-% bei 330 °C nach 1 h. Die TGA wird unter Luft-Atmosphäre durchgeführt.

Bei der Polymerformmasse umfasst maximal die erfindungsgemäßen Flammschutzmittelzusammensetzung, Polyamid, MPP Melaminpolyphosphat), Glasfasern, Zinkborat und Wachs.

## Patentansprüche

1. Flammschutzmittelmischungen enthaltend
a) 0,0001 bis 74,8 Gew.-% Dialkylphosphinsäuresalze der Formel (II) 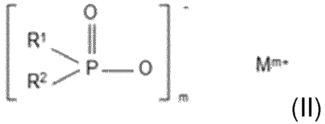 worin
R¹ und R² gleich oder verschieden sind und C₁-C₁₈-Alkyl linear, verzweigt oder cyclisch, C₆-C₁₈-Aryl, C₇-C₁₈-Arylalkyl und/oder C₇-C₁₈-Alkylaryl,
m 1 bis 4 und
M Mg, Ca, Al, Sb, Sn, Ge, Ti, Zr, Zn, Ce, Bi, Sr, Mn, Li, Na und/oder K bedeuten als Komponente A),
b) 0,0001 bis 25 Gew.-% Eisen(II)dialkylphosphinate, Eisen(III)dialkylphosphinate, Eisen(II)monoalkylphosphinate, Eisen(III)monoalkylphosphinate, Eisen(II)alkylphosphonate, Eisen(III)alkylphosphonate, Eisen(II)phosphit, Eisen(III)-phosphit, Eisen(II)phosphat und/oder Eisen(III)phosphat als Komponente B1),
c) 0,1 bis 40 Gew.-% Telomere der Formel (III)
H-(C_{w}H_{2w})ₖ P(O)(OM) (CₓH₂ₓ)ₗ-H (III)
wobei in Formel (III), unabhängig voneinander,
| | | |
|---|---|---|
| k | 1 bis 9, l | 1 bis 9, |
| w | 2 bis 9, x | 2 bis 9, |
bedeuten und
M Mg, Ca, Al, Sb, Sn, Ge, Ti, Fe, Zr, Zn, Ce, Bi, Sr, Mn, Li, Na, K und/oder eine protonierte Stickstoffbase bedeutet,
und die Gruppen C_{w}H_{2w})ₖ, (CₓH₂ₓ)ₗ geradlinig oder verzweigt sein können;
und/oder es sich bei den Telomeren um solche der Formel (I) handelt 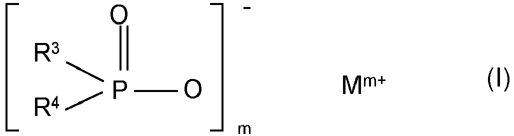 worin
R³, R⁴ gleich oder verschieden sind und C₆-C₁₀-Arylen, C₇-C₂₀-Alkylarylen, C₇-C₂₀-Arylalkylen und/oder C₃-C₁₆-Cycloalkyl oder -Bicycloalkyl,
M Mg, Ca, Al, Sb, Sn, Ge, Ti, Fe, Zr, Zn, Ce, Bi, Sr, Mn, Li, Na, K
und/oder eine protonierte Stickstoffbase als Komponente C) und
d) 0,1 bis 40 Gew.-% Synergisten als Komponente D), wobei es sich bei den Synergisten um Melaminphosphat, Dimelaminphosphat, Pentamelamintriphosphat, Trimelamindiphosphat, Tetrakismelamintriphosphat, Hexakismelaminpentaphosphat, Melamindiphosphat, Melamintetraphosphat, Melaminpyrophosphat, Melaminpolyphosphate, Melampolyphosphate, Melempolyphosphate und/oder Melonpolyphosphate; um Melaminkondensationsprodukte wie Melam, Melem und/oder Melon; um oligomere Ester des Tris(hydroxyethyl)isocyanurats mit aromatischen Polycarbonsäuren, Benzoguanamin, Tris(hydroxyethyl)isocyanurat, Allantoin, Glycouril, Melamin, Melamincyanurat, Harnstoffcyanurat, Dicyandiamid und/oder Guanidin; um stickstoffhaltige Phosphate der Formeln (NH₄)_{y}H_{3-y}PO₄ bzw. (NH₄PO₃)_{z}, mit y gleich 1 bis 3 und z gleich 1 bis 10.000; um Aluminiumphosphite, Aluminiumpyrophosphite, Aluminiumphosphonate, Aluminiumpyrophosphonate; um Silicate, Zeolite, Kieselsäuren, Keramikpulver, Zinkverbindungen, z. B. Zinkborat, Zinkcarbonat, Zinkstannat, Zinkhydroxystannat, Zinkphosphat, Zinksulfid, Zinkoxid, Zinkhydroxid, Zinnoxidhydrat, basisches Zink-Silikat, Zinkmolybdat Magnesiumhydroxid, Hydrotalcit, Magnesiumcarbonat und/oder Calciummagnesiumcarbonat handelt,
wobei die Summe von A), B1), C) und D) 100 Gew.-% ergibt mit der Maßgabe, dass es sich bei A), B1) und C) um unterschiedliche Verbindungen handelt.

2. Flammschutzmittelmischung nach Anspruch 1, **dadurch kennzeichnet, dass** in Formel (II) R¹, R² gleich oder verschieden und, unabhängig voneinander, Methyl, Ethyl, n-Propyl, iso-Propyl, Butyl, n-Butyl, tert.-Butyl, n-Pentyl, 2-Pentyl, 3-Pentyl, 2-Methylbutyl, 3-Methylbutyl (iso-Pentyl), 3-Methylbut-2-yl, 2-Methylbut-2-yl, 2,2-Dimethylpropyl (Neopentyl), Hexyl, Heptyl, Octyl, Nonyl, Decyl, Cyclopentyl, Cyclopentylethyl, Cyclohexyl, Cyclohexylethyl, Phenyl, Phenylethyl, Methylphenyl und/oder Methylphenylethyl bedeuten.

3. Flammschutzmittelmischung nach Anspruch 1 oder 2, **dadurch kennzeichnet, dass** die Komponente B1) als Eisen(II)bis- und/oder Eisen(III)tris(diethylphosphinat), -(dipropylphosphinat), -(butylethyl-phosphinat), -(n-butylethylphosphinat, -(sec-butylethylphosphinat), -(hexylethylphosphinat), -(dibutylphosphinat), -(hexylbutylphosphinat), -(octylethylphosphinat), -(ethyl(cyclopentylethyl)phosphinat), -(butyl(cyclopentylethyl)phosphinat), -(ethyl(cyclohexylethyl)phosphinat), -(butyl(cyclohexylethyl)phosphinat, -(ethyl(phenylethyl)phosphinat), -(butyl(phenylethyl)phosphinat), -(ethyl(4-methylphenylethyl)phosphinat), -(butyl(4-methylphenylethyl)phosphinat), -(butylcyclopentylphosphinat), -(butylcyclohexylethylphosphinat), -(butylphenylphosphinat), -(ethyl(4-methylphenyl)phosphinat) und/oder -(butyl(4-methylphenyl)phosphinat;
Eisen(II)mono- und/oder Eisen(III)mono(ethylphosphinat), -(propylphosphinat), -(butylphosphinat, -n-butylphosphinat, -(sec-butylphosphinat), -/hexylphosphinat) und/oder -(octylphosphinat); um Eisen(II)- und/oder Eisen(III)-(ethylphosphonat), -(propylphosphonat), -(butylphosphonat, -(n-butylphosphonat, -(sec-butylphosphonat), -(hexylphosphonat) , -(octylphosphonat), Eisen(II)- und/oder Eisen(III)-Salze der Ethyl(cyclopentylethyl)phosphinsäure, Butyl(cyclopentylethyl)phosphinsäure, Ethyl(cyclohexylethyl)phosphinsäure, Butyl(cyclohexylethyl)phosphinsäure, Ethyl(phenylethyl)phosphinsäure, Butyl(phenylethyl)phosphinsäure, Ethyl(4-methylphenylethyl)phosphinsäure, Ethylphenylphosphinsäure, Butyl(4-methylphenylethyl)phosphinsäure, Butylcyclopentylphosphininsäure, Butylcyclohexylethylphosphinsäure, Butylphenylphosphinsäure, Ethyl(4-methylphenyl)phosphinsäure, Butyl(4-methylphenyl)phosphinsäure, Ethylphosphinylessigsäure und/oder Ethylphosphinylbuttersäure), der Hydroxymethylethyl-Ethylphosphinsäure, 1-Hydroxy-1-Methylpropyl-Ethylphosphinsäure, Butyl-ethylphosphonsäureester, Acyl-Ethylphosphonsäureanhydrid, Butyl-Ethylphosphonsäure, Butylethylphosphinsäure, Ethylphosphinylisobutyronitril (1-Cyano-1-methylethyl-Ethylphosphinsäure), Propylethylphosphinäsure, t-Butyl-Ethylphosphonsäureester, t-ButylEthylphosphinsäure, , Hydroxymethylbutyl-Ethylphosphinsäure, 3-Hydroxy-3-methylpentyl-Ethylphosphinäsure, Propoxyethyl-Ethylphosphinsäure, Phenylethyl-Ethylphosphinsäure, 2-Ethylphosphinylethyl-Laurylsäureester, Ethylpentylphosphinsäure, t-Butoxyethyl-Ethylphosphinsäure, Ethylphosphinylisohexansäurenitril, Hexylethylphosphinsäure und/oder Ethylphosphinylethylsulfat vorliegt.

4. Flammschutzmittelmischungen nach einem oder mehreren der Ansprüche 1 bis 3, **dadurch gekennzeichnet, dass** in Formel (III) w und x jeweils 2 oder 3 und k und l jeweils 1 bis 3 bedeuten und M Al, Ti, Fe oder Zn bedeutet.

5. Flammschutzmittelmischungen nach einem oder mehreren der Ansprüche 1 bis 4, **dadurch gekennzeichnet, dass** es sich bei den Telomeren um Metallsalze der Ethylbutylphosphinsäure, Dibutylphosphinsäure, Ethylhexylphosphinsäure, Butylhexylphosphinsäure, Ethyloctylphosphinsäure, sec-Butylethylphosphinsäure, 1-Ethylbutyl-Butyl-phosphinsäure, Ethyl-1-Methylpentyl-phosphinsäure, Di-sec-Butylphosphinsäure (Di-1-Methyl-propylphosphinsäure), Propyl-Hexylphosphinsäure, Dihexylphosphinsäure, Hexyl-Nonylphosphinsäure, Propyl-Nonylphosphinsäure, Dinonylphosphinsäure, Dipropylphosphinsäure, Butyl-Octylphosphinsäure, Hexyl-Octylphosphinsäure, Dioctylphosphinsäure, Ethyl(cyclopentylethyl)phosphinsäure, Butyl(cyclopentylethyl)phosphinsäure, Ethyl(cyclohexylethyl)phosphinsäure, Butyl(cyclohexylethyl)phosphinsäure, Ethyl(phenylethyl)phosphinsäure, Butyl(phenylethyl)phosphinsäure, Ethyl(4-methylphenylethyl)phosphinsäure, Butyl(4-methylphenylethyl)phosphinsäure, Butylcyclopentylphosphininsäure, Butylcyclohexylethylphosphinsäure, Butylphenylphosphinsäure, Ethyl(4-methylphenyl)phosphinsäure und/oder Butyl(4-methylphenyl)phosphinsäure, Ethylphosphinylisobutyronitril (1-Cyano-1-methylethyl-Ethylphosphinsäure), Propylethylphosphinsäure, Hydroxymethylbutyl-Ethylphosphinsäure, 3-Hydroxy-3-methylpentyl-Ethylphosphinäsure, Propoxyethyl-Ethylphosphinsäure, Phenylethyl-Ethylphosphinsäure, Ethylpentylphosphinsäure, t-Butoxyethyl-Ethylphosphinsäure, Ethylphosphinylisohexansäurenitril, Hexylethylphosphinsäure und/oder Ethylphosphinylethylsulfat handelt, wobei das Metall des Metallsalzes aus der Gruppe Mg, Ca, Al, Sb, Sn, Ge, Ti, Fe, Zr, Zn, Ce, Bi, Sr, Mn, Li, Na und/oder K entstammt.

6. Flammschutzmittelmischung nach einem oder mehreren der Ansprüche 1 bis 5, **dadurch kennzeichnet, dass** die Komponenten A) und B1) als physikalische Mischung vorliegen.

7. Flammschutzmittelmischungen nach einem oder mehreren der Ansprüche 1 bis 5, **dadurch gekennzeichnet, dass** die Komponenten A), B) und C) als physikalische Mischung miteinander vorliegen

8. Flammschutzmittelmischungen nach einem oder mehreren der Ansprüche 1 bis 5, **dadurch gekennzeichnet, dass** die Komponenten A) und C) miteinander eine einheitliche chemische Verbindung bilden und diese als physikalische Mischung mit der Komponente B) vorliegt.

9. Flammschutzmittelmischungen nach einem oder mehreren der Ansprüche 1 bis 8, **dadurch gekennzeichnet, dass** sie
eine Teilchengröße von 0,01 bis 1000 µm,
eine Schüttdichte von 50 bis 1500 g/l,
eine Stampfdichte von 100 g/l bis 1100 g/l,
einen Schüttwinkel von 5 bis 45 Grad,
eine BET-Oberfläche von 1 bis 40 m²/g,
L-Farbwerte von 85 bis 99,9,
a-Farbwerte von -4 bis +9,
b-Farbwerte von -2 bis +6,
aufweisen.

10. Flammschutzmittelmischungen nach einem oder mehreren der Ansprüche 1 bis 9, **dadurch gekennzeichnet, dass** sie
eine Teilchengröße von 0,5 bis 800 µm,
eine Schüttdichte von 80 bis 800 g/l,
eine Stampfdichte von 600 g/L bis 800 g/l,
einen Schüttwinkel von 10 bis 40 Grad aufweisen.

11. Verfahren zur Herstellung von Flammschutzmittelmischungen nach einem oder mehreren der Ansprüche 1 bis 10, **dadurch gekennzeichnet, dass** man
a) in einer Prozessstufe 1 0,9 bis 1,1 Moleküle Olefin pro P an ein wasserlösliches Salz der hypophosphorigen Säure oder der Säure selbst addiert,
b) in einer Prozessstufe 2 0,9 bis 1,1 zusätzliche Moleküle Olefin pro P an das Zwischenprodukt aus a) zu Dialkylphosphinsäure oder deren Salz addiert
c) in einer Prozessstufe 3 ein bis 9 weitere Olefinmoleküle an 0 bis 20 % der Dialkylphosphinatmoleküle aus Prozessstufe 1 addiert, so dass sich Telomere bilden, wobei im Falle des Entstehens von Dialkylphosphinsäure diese in ein entsprechendes Salz überführt,
d) in einer Prozessstufe 4 eine Kristallisation des Zwischenprodukts aus b) und/oder c) und einem Metallsalz durchführt,
e) in einer Prozessstufe 5 eine Eisenverbindung / Komponente B zumischt.

12. Verfahren zur Herstellung von Flammschutzmittelmischungen nach einem oder mehreren der Ansprüche 1 bis 10, **dadurch gekennzeichnet, dass** man
a) in einer Prozessstufe 1 0,9 bis 1,1 Moleküle Olefin pro P an ein wasserlösliches Salz der hypophosphorigen Säure oder der Säure selbst addiert,
b) in einer Prozessstufe 2 0,9 bis 1,1 zusätzliche Moleküle Olefin pro P an das Zwischenprodukt aus a) zu Dialkylphosphinsäure oder deren Salz addiert
c) in einer Prozessstufe 3 ein bis 9 weitere Olefinmoleküle an 0,1 bis 20 % der Dialkylphosphinatmoleküle aus Prozessstufe 1 addiert, so dass sich Telomere bilden, wobei im Falle des Entstehens von Dialkylphosphinsäure diese in ein entsprechendes Salz überführt,
d) in einer Prozessstufe 4 eine Cofällung des Zwischenprodukts aus c) und einem Metallsalz durchführt, und
e) in einer Prozessstufe 5 eine Eisenverbindung / Komponente B zumischt.

13. Verfahren zur Herstellung von Flammschutzmittelmischungen nach einem oder mehreren der Ansprüche 1 bis 10, **dadurch gekennzeichnet, dass** man
a) in einer Prozessstufe 1 0,9 bis 1,1 Moleküle Olefin pro P an ein wasserlösliches Salz der hypophosphorigen Säure oder der Säure selbst addiert,
b) in einer Prozessstufe 2 0,9 bis 1,1 zusätzliche Moleküle Olefin pro P an das Zwischenprodukt aus a) zu Dialkylphosphinsäure oder deren Salz addiert wobei im Falle des Entstehens von Dialkylphosphinsäure diese in ein entsprechendes Salz überführt,
c) in einer Prozessstufe 3 eine Cofällung des Zwischenprodukts aus b) und einem Eisensalz durchführt, und
d) in einer Prozessstufe 4 die Telomeren / Komponente C zumischt.

14. Verfahren zur Herstellung von Flammschutzmittelmischungen nach einem oder mehreren der Ansprüche 1 bis 10, **dadurch gekennzeichnet, dass** man
a) in einer Prozessstufe 1 0,9 bis 1,1 Moleküle Olefin pro P an ein wasserlösliches Salz der hypophosphorigen Säure oder der Säure selbst addiert,
b) in einer Prozessstufe 2 0,9 bis 1,1 zusätzliche Moleküle Olefin pro P an das Zwischenprodukt aus a) zu Dialkylphosphinsäure oder deren Salz addiert, wobei im Falle des Entstehens von Dialkylphosphinsäure diese in ein entsprechendes Salz überführt,
c) in einer Prozessstufe 3 eine Kristallisation des Zwischenprodukts aus b) und einem Metallsalz durchführt,
e) in einer Prozessstufe 4 ggf. Telomere zumischt und
f) in einer Prozessstufe 5 eine Eisenverbindung / Komponente B zumischt.

15. Verfahren nach einem oder mehreren der Ansprüche 11 bis 14, **dadurch gekennzeichnet, dass** man als Eisenverbindungen und/oder als Eisensalz solche mit Anionen der siebten Hauptgruppe; mit Anionen der Oxosäuren der siebten Hauptgruppe; mit Anionen der sechsten Hauptgruppe; mit Anionen der Oxosäuren der sechsten Hauptgruppe; mit Anionen der fünften Hauptgruppe; mit Anionen der Oxosäuren der fünften Hauptgruppe; mit Anionen der Oxosäuren der vierten Hauptgruppe; mit Anionen der Oxosäuren der dritten Hauptgruppe; mit Anionen der Pseudohalogenide; mit Anionen der Oxosäuren der Übergangsmetalle; mit organischen Anionen aus der Gruppe der Mono-, Di-, Oligo-, Polycarbonsäuren, der Essigsäure, der Trifluoressigsäure, Propionate, Butyrate, Valerate, Caprylate, Oleate, Stearate, der Oxalsäure, der Weinsäure, Citronensäure, Benzoesäure, Salicylate, Milchsäure, Acrylsäure, Maleinsäure, Bernsteinsäure, von Aminosäuren, von sauren Hydroxofunktionen, Para-Phenolsulfonate, Para-Phenolsulfonathydrate, Acetylacetonathydrate, Tannate, Dimethyldithiocarbamate, Trifluormethansulfonat, Alkylsulfonate und/oder Aralkylsulfonate; als elementares Eisen; als Eisenverbindung in der Form ihrer Fluoride, Chloride, Bromide, Iodide, Iodat, Perchlorat, Oxide, Hydroxide, Peroxide, Superoxide, Sulfate, Hydrogensulfate, Sulfathydrate, Sulfite, Peroxosulfate, Nitride, Phosphide, Nitrate, Nitrathydrate, Nitrite, Phosphate, Peroxophosphate, Phosphite, Hypophosphite, Pyrophosphate, Carbonate, Hydrogencarbonate, Hydroxidcarbonate, Carbonathydrate, Silicate, Hexafluorosilicate, Hexafluorosilicathydrate, Stannate, Borate, Polyborate, Peroxoborate, Thiocyanate, Cyanate, Cyanide, Chromate, Chromite, Molybdate, Permanganate, Formiate, Acetate, Acetathydrate, Trifluoracetathydrate, Propionate, Butyrate, Valerate, Caprylate, Oleate, Stearate, Oxalate, Tartrate, Citrate, basische Citrate, Citrathydrate, Benzoate, Salicylate, Lactate, Lactathydrate, Acrylsäure, Maleinsäure, Bernsteinsäure, Glyzin, Phenolate, Para-Phenolsulfonate, Para-Phenolsulfonathydrate, Acetylacetonathydrate, Tannate, Dimethyldithiocarbamate, Trifluormethansulfonat, Alkylsulfonate und/oder Aralkylsulfonate; und/oder als Legierungen von Eisen mit Kupfer, Zinn, Nickel, Chrom, Molybdän, Wolfram, Vanadium einsetzt.

16. Verfahren nach einem oder mehreren der Ansprüche 11 bis 15, **dadurch gekennzeichnet, dass** man in den Prozessstufen Initiatoren, Radikalinitiatoren, Photoinitiatoren, Inhibitoren, Radikalsteuerungshilfsmittel, Nukleierungsmittel, Cokristallisationshilfsmittel, Kristallisierungshilfsmittel, starke Elektrolyte, Netzmittel, Lösungsmittel, Säure, Laugen, alkalische Verbindungen, starke alkalische Lösungen, Fließhilfsmittel, Bleichmittel, Kupplungsreagenzien, Haftvermittler, Trennmittel, Kunststoffadditive und/oder Beschichtungsadditivezusetzt.

17. Verwendung von Flammschutzmittelmischungen nach einem oder mehreren der Ansprüche 1 bis 10 als Zwischenprodukt für weitere Synthesen, als Binder, als Vernetzer bzw. Beschleuniger beim Aushärten von Epoxyharzen, Polyurethanen und ungesättigten Polyesterharzen, als Polymerstabilisatoren, als Pflanzenschutzmittel, als Sequestrierungsmittel, als Mineralöl-Additiv, als Korrosionsschutzmittel, in Wasch- und Reinigungsmittelanwendungen und in Elektronikanwendungen; als Flammschutzmittel, als Flammschutzmittel für Klarlacke und Intumeszenzbeschichtungen, als Flammschutzmittel für Holz und andere cellulosehaltige Produkte, als reaktives und/oder nicht reaktives Flammschutzmittel für Polymere, zur Herstellung von flammgeschützten Polymerformmassen, zur Herstellung von flammgeschützten Polymerformkörpern und/oder zum flammhemmend Ausrüsten von Polyester und Cellulose-Rein- und Mischgeweben durch Imprägnierung.

18. Flammgeschützte thermoplastische oder duroplastische Polymerformmasse, Polymer-Formkörper, -Filme, -Fäden und Fasern enthaltend 0,5 bis 50 Gew.-% Flammschutzmittelmischungen nach einem oder mehreren der Ansprüche 1 bis 10, 0,5 bis 95 Gew.-% thermoplastisches oder duroplastisches Polymer oder Mischungen derselben, 0 bis 55 Gew.-% Additive und 0 bis 70 Gew.-% Füllstoff bzw. Verstärkungsmaterialien, wobei die Summe der Komponenten 100 Gew.-% beträgt und wobei es sich bei dem Polymer um thermoplastische Polymere der Art Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol) oder PPE/HIPS (Polyphenylenether/Polystyrol-HI) Kunststoffe und/oder um duroplastische Polymere der Art Formaldehyd-, Epoxid-, Melamin-Phenolharz-Polymere, ungesättigte Polyester, Epoxidharze und/oder Polyurethane.

19. Thermoplastische oder duroplastische Polymerformmasse, Formkörper, -Filme, -Fäden und -Fasern nach Anspruch 18, **dadurch gekennzeichnet, dass** sie weitere Additive enthalten, wobei es sich dabei um Antioxidantien, UV-Stabilisatoren, Gammastrahlenstabilisatoren, Hydrolysestabilisatoren, , Antistatika, Emulgatoren, Nukleierungsmittel, Weichmacher, Verarbeitungshilfsmittel, Schlagzähmodifikatoren, Farbstoffe, Pigmente und andere handelt.

## Claims

1. Flame retardant mixtures comprising
a) 0.0001 % to 74.8% by weight of dialkylphosphinic salts of the formula (II) 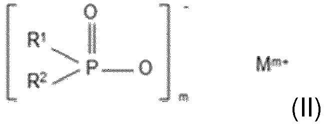 where
R¹ and R² are the same or different and are C₁-C₁₈-alkyl in linear, branched or cyclic form, C₆-C₁₈-aryl, C₇-C₁₈-arylalkyl and/or C₇-C₁₈-alkylaryl,
m is 1 to 4 and
M is Mg, Ca, Al, Sb, Sn, Ge, Ti, Zr, Zn, Ce, Bi, Sr, Mn, Li, Na and/or K as component A),
b) 0.0001 % to 25% by weight of iron(II) dialkylphosphinates, iron(III) dialkylphosphinates, iron(II) monoalkylphosphinates, iron(III) monoalkylphosphinates, iron(II) alkylphosphonates, iron(III) alkylphosphonates, iron(II) phosphite, iron(III) phosphite, iron(II) phosphate and/or iron(III) phosphate as component B1),
c) 0.1 % to 40% by weight of telomers of the formula (III)
H-(C_{w}H_{2w})ₖ P(O)(OM)(CₓH₂ₓ)ₗ-H (III)
where, in formula (III), independently of one another,
| | | |
|---|---|---|
| k | is 1 to 9, l | is 1 to 9, |
| w | is 2 to 9, x | is 2 to 9, |
and
M is Mg, Ca, Al, Sb, Sn, Ge, Ti, Fe, Zr, Zn, Ce, Bi, Sr, Mn, Li, Na, K and/or a protonated nitrogen base,
and the (C_{w}H_{2w})ₖ, (CₓH₂ₓ)ₗ groups may be linear or branched;
and/or the telomers are those of the formula (I) 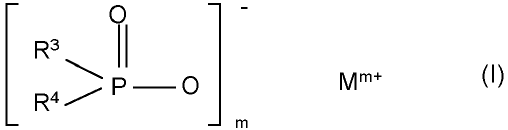 where
R³, R⁴ are the same or different and are C₆-C₁₀-arylene, C₇-C₂₀-alkylarylene, C₇-C₂₀-arylalkylene and/or C₃-C₁₆-cycloalkyl or -bicycloalkyl,
M is Mg, Ca, Al, Sb, Sn, Ge, Ti, Fe, Zr, Zn, Ce, Bi, Sr, Mn, Li, Na, K
and/or a protonated nitrogen base as component C) and
d) 0.1% to 40% by weight of synergists as component D), where the synergists are melamine phosphate, dimelamine phosphate, pentamelamine triphosphate, trimelamine diphosphate, tetrakismelamine triphosphate, hexakismelamine pentaphosphate, melamine diphosphate, melamine tetraphosphate, melamine pyrophosphate, melamine polyphosphates, melam polyphosphates, melem polyphosphates and/or melon polyphosphates; or melamine condensation products such as melam, melem and/or melon; or oligomeric esters of tris(hydroxyethyl) isocyanurate with aromatic polycarboxylic acids, benzoguanamine, tris(hydroxyethyl) isocyanurate, allantoin, glycoluril, melamine, melamine cyanurate, urea cyanurate, dicyandiamide and/or guanidine; or nitrogen-containing phosphates of the formula (NH₄)_{y}H_{3-y}PO₄ or (NH₄PO₃)_{z} with y = 1 to 3 and z = 1 to 10 000; or aluminum phosphites, aluminum pyrophosphites, aluminum phosphonates, aluminum pyrophosphonates; or silicates, zeolites, silicas, ceramic powder, zinc compounds, e.g. zinc borate, zinc carbonate, zinc stannate, zinc hydroxystannate, zinc phosphate, zinc sulfide, zinc oxide, zinc hydroxide, tin oxide hydrate, basic zinc silicate, zinc molybdate, magnesium hydroxide, hydrotalcite, magnesium carbonate and/or calcium magnesium carbonate,
where the sum total of A), B1), C) and D) is 100% by weight, with the proviso that A), B1) and C) are different compounds.

2. Flame retardant mixture according to Claim 1, **characterized in that** R¹, R² in formula (II) are the same or different and are independently methyl, ethyl, n-propyl, isopropyl, butyl, n-butyl, tert-butyl, n-pentyl, 2-pentyl, 3-pentyl, 2-methylbutyl, 3-methylbutyl (isopentyl), 3-methylbut-2-yl, 2-methylbut-2-yl, 2,2-dimethylpropyl (neopentyl), hexyl, heptyl, octyl, nonyl, decyl, cyclopentyl, cyclopentylethyl, cyclohexyl, cyclohexylethyl, phenyl, phenylethyl, methylphenyl and/or methylphenylethyl.

3. Flame retardant mixture according to Claim 1 or 2, **characterized in that** component B1) is present in the form of iron(II) bis- and/or iron(III) tris(diethylphosphinate), -(dipropylphosphinate), -(butylethylphosphinate), -(n-butylethylphosphinate), -(sec-butylethylphosphinate), -(hexylethylphosphinate), -(dibutylphosphinate), -(hexylbutylphosphinate), -(octylethylphosphinate), -(ethyl(cyclopentylethyl)phosphinate), -(butyl(cyclopentylethyl)phosphinate), -(ethyl(cyclohexylethyl)phosphinate), -(butyl(cyclohexylethyl)phosphinate), -(ethyl(phenylethyl)phosphinate), -(butyl(phenylethyl)phosphinate), -(ethyl(4-methylphenylethyl)phosphinate), -(butyl(4-methylphenylethyl)phosphinate), -(butylcyclopentylphosphinate), -(butylcyclohexylethylphosphinate), -(butylphenylphosphinate), -(ethyl(4-methylphenyl)phosphinate) and/or -(butyl(4-methylphenyl)phosphinate);
iron(II) mono- and/or iron(III) mono(ethylphosphinate), -(propylphosphinate), -(butylphosphinate), -(n-butylphosphinate), -(sec-butylphosphinate), -(hexylphosphinate) and/or -(octylphosphinate); or of iron(II) and/or iron(III) ethylphosphonate,
propylphosphonate, butylphosphonate, n-butylphosphonate, sec-butylphosphonate, hexylphosphonate, octylphosphonate, iron(II) and/or iron(III) salts of ethyl(cyclopentylethyl)phosphinic acid, butyl(cyclopentylethyl)phosphinic acid, ethyl(cyclohexylethyl)phosphinic acid, butyl(cyclohexylethyl)phosphinic acid, ethyl(phenylethyl)phosphinic acid, butyl(phenylethyl)phosphinic acid, ethyl(4-methylphenylethyl)phosphinic acid, ethylphenylphosphinic acid, butyl(4-methylphenylethyl)phosphinic acid, butylcyclopentylphosphinic acid, butylcyclohexylethylphosphinic acid, butylphenylphosphinic acid, ethyl(4-methylphenyl)phosphinic acid, butyl(4-methylphenyl)phosphinic acid, ethylphosphinylacetic acid and/or ethylphosphinylbutyric acid, of hydroxymethyl(ethyl)ethylphosphinic acid, 1-hydroxy-1-methylpropylethylphosphinic acid, butyl ethylphosphonate, acylethylphosphonic anhydride, butylethylphosphonic acid, butylethylphosphinic acid, ethylphosphinylisobutyronitrile (1-cyano-1-methylethylethylphosphinic acid), propylethylphosphinic acid, t-butyl ethylphosphonate, t-butylethylphosphinic acid, hydroxymethyl(butyl)ethylphosphinic acid, 3-hydroxy-3-methylpentylethylphosphinic acid, propoxyethylethylphosphinic acid, phenylethylethylphosphinic acid, 2-ethylphosphinylethyl laurate, ethylpentylphosphinic acid, t-butoxyethylethylphosphinic acid, ethylphosphinylisohexanonitrile, hexylethylphosphinic acid and/or ethylphosphinylethyl sulfate.

4. Flame retardant mixtures according to one or more of Claims 1 to 3, **characterized in that**, in formula (III), w and x are each 2 or 3 and k and I are each 1 to 3 and M is Al, Ti, Fe or Zn.

5. Flame retardant mixtures according to one or more of Claims 1 to 4, **characterized in that** the telomers are metal salts of ethylbutylphosphinic acid, dibutylphosphinic acid, ethylhexylphosphinic acid, butylhexylphosphinic acid, ethyloctylphosphinic acid, sec-butylethylphosphinic acid, 1-ethylbutyl(butyl)phosphinic acid, ethyl(1-methylpentyl)phosphinic acid, di-sec-butylphosphinic acid (di-1-methylpropylphosphinic acid), propyl(hexyl)phosphinic acid, dihexylphosphinic acid, hexyl(nonyl)phosphinic acid, propyl(nonyl)phosphinic acid, dinonylphosphinic acid, dipropylphosphinic acid, butyl(octyl)phosphinic acid, hexyl(octyl)phosphinic acid, dioctylphosphinic acid, ethyl(cyclopentylethyl)phosphinic acid, butyl(cyclopentylethyl)phosphinic acid, ethyl(cyclohexylethyl)phosphinic acid, butyl(cyclohexylethyl)phosphinic acid, ethyl(phenylethyl)phosphinic acid, butyl(phenylethyl)phosphinic acid, ethyl(4-methylphenylethyl)phosphinic acid, butyl(4-methylphenylethyl)phosphinic acid, butylcyclopentylphosphinic acid, butylcyclohexylethylphosphinic acid, butylphenylphosphinic acid, ethyl(4-methylphenyl)phosphinic acid and/or butyl(4-methylphenyl)phosphinic acid, ethylphosphinylisobutyronitrile (1-cyano-1-methylethylethylphosphinic acid), propylethylphosphinic acid, hydroxymethyl(butyl)ethylphosphinic acid, 3-hydroxy-3-methylpentylethylphosphinic acid, propoxyethylethylphosphinic acid, phenylethylethylphosphinic acid, ethylpentylphosphinic acid, t-butoxyethylethylphosphinic acid, ethylphosphinylisohexanonitrile, hexylethylphosphinic acid and/or ethylphosphinylethyl sulfate, where the metal of the metal salt comes from the group of Mg, Ca, Al, Sb, Sn, Ge, Ti, Fe, Zr, Zn, Ce, Bi, Sr, Mn, Li, Na and/or K.

6. Flame retardant mixture according to one or more of Claims 1 to 5, **characterized in that** components A) and B1) are in the form of a physical mixture.

7. Flame retardant mixtures according to one or more of Claims 1 to 5, **characterized in that** components A), B) and C) are in the form of a physical mixture with one another.

8. Flame retardant mixtures according to one or more of Claims 1 to 5, **characterized in that** components A) and C) form a homogeneous chemical compound with one another, and the latter is in the form of a physical mixture with component B).

9. Flame retardant mixtures according to one or more of Claims 1 to 8, **characterized in that** they have
a particle size of 0.01 to 1000 µm,
a bulk density of 50 to 1500 g/L,
a tamped density of 100 g/L to 1100 g/L,
an angle of repose of 5 to 45 degrees,
a BET surface area of 1 to 40 m²/g,
L color values of 85 to 99.9,
a color values of -4 to +9,
b color values of -2 to +6.

10. Flame retardant mixtures according to one or more of Claims 1 to 9, **characterized in that** they have
a particle size of 0.5 to 800 µm,
a bulk density of 80 to 800 g/L,
a tamped density of 600 g/L to 800 g/L,
an angle of repose of 10 to 40 degrees.

11. Process for producing flame retardant mixtures according to one or more of Claims 1 to 10, **characterized in that**
a) in a process stage 1, 0.9 to 1.1 molecules of olefin per P are added onto a water-soluble salt of the hypophosphorous acid or the acid itself,
b) in a process stage 2, 0.9 to 1.1 additional molecules of olefin per P are added onto the intermediate from a) to give dialkylphosphinic acid or salt thereof,
c) in a process stage 3, 1 to 9 further olefin molecules are added onto 0% to 20% of the dialkylphosphinate molecules from process stage 1, so as to form telomers, with conversion of dialkylphosphinic acid, if it is formed, to a corresponding salt,
d) in a process stage 4, a crystallization of the intermediate from b) and/or c) and a metal salt is conducted,
e) in a process stage 5, an iron compound/component B is mixed in.

12. Process for producing flame retardant mixtures according to one or more of Claims 1 to 10, **characterized in that**
a) in a process stage 1, 0.9 to 1.1 molecules of olefin per P are added onto a water-soluble salt of the hypophosphorous acid or the acid itself,
b) in a process stage 2, 0.9 to 1.1 additional molecules of olefin per P are added onto the intermediate from a) to give dialkylphosphinic acid or salt thereof,
c) in a process stage 3, 1 to 9 further olefin molecules are added onto 0.1 % to 20% of the dialkylphosphinate molecules from process stage 1, so as to form telomers, with conversion of dialkylphosphinic acid, if it is formed, to a corresponding salt,
d) in a process stage 4, a coprecipitation of the intermediate from c) and a metal salt is conducted, and
e) in a process stage 5, an iron compound/component B is mixed in.

13. Process for producing flame retardant mixtures according to one or more of Claims 1 to 10, **characterized in that**
a) in a process stage 1, 0.9 to 1.1 molecules of olefin per P are added onto a water-soluble salt of the hypophosphorous acid or the acid itself,
b) in a process stage 2, 0.9 to 1.1 additional molecules of olefin per P are added onto the intermediate from a) to give dialkylphosphinic acid or salt thereof, with conversion of dialkylphosphinic acid, if it is formed, to a corresponding salt,
c) in a process stage 3, a coprecipitation of the intermediate from b) and an iron salt is conducted, and
d) in a process stage 4, the telomers/component C are mixed in.

14. Process for producing flame retardant mixtures according to one or more of Claims 1 to 10, **characterized in that**
a) in a process stage 1, 0.9 to 1.1 molecules of olefin per P are added onto a water-soluble salt of the hypophosphorous acid or the acid itself,
b) in a process stage 2, 0.9 to 1.1 additional molecules of olefin per P are added onto the intermediate from a) to give dialkylphosphinic acid or salt thereof, with conversion of dialkylphosphinic acid, if it is formed, to a corresponding salt,
c) in a process stage 3, a crystallization of the intermediate from b) and a metal salt is conducted,
e) in a process stage 4, telomers are optionally mixed in and
f) in a process stage 5, an iron compound/component B is mixed in.

15. Process according to one or more of Claims 11 to 14, **characterized in that** the iron compounds and/or iron salts used are those with anions of the seventh main group; with anions of the oxo acids of the seventh main group; with anions of the sixth main group; with anions of the oxo acids of the sixth main group; with anions of the fifth main group; with anions of the oxo acids of the fifth main group; with anions of the oxo acids of the fourth main group; with anions of the oxo acids of the third main group; with anions of the pseudohalides; with anions of the oxo acids of the transition metals; with organic anions from the group of the mono-, di-, oligo- and polycarboxylic acids, of acetic acid, of trifluoroacetic acid, propionates, butyrates, valerates, caprylates, oleates, stearates, of oxalic acid, of tartaric acid, citric acid, benzoic acid, salicylates, lactic acid, acrylic acid, maleic acid, succinic acid, of amino acids, of acidic hydroxo functions, para-phenolsulfonates, para-phenolsulfonate hydrates, acetylacetonate hydrates, tannates, dimethyldithiocarbamates, trifluoromethanesulfonate, alkylsulfonates and/or aralkylsulfonates; as elemental iron; as iron compound in the form of the fluorides, chlorides, bromides, iodides, iodate, perchlorate, oxides, hydroxides, peroxides, superoxides, sulfates, hydrogensulfates, sulfate hydrates, sulfites, peroxosulfates, nitrides, phosphides, nitrates, nitrate hydrates, nitrites, phosphates, peroxophosphates, phosphites, hypophosphites, pyrophosphates, carbonates, hydrogencarbonates, hydroxidecarbonates, carbonate hydrates, silicates, hexafluorosilicates, hexafluorosilicate hydrates, stannates, borates, polyborates, peroxoborates, thiocyanates, cyanates, cyanides, chromates, chromites, molybdates, permanganates, formates, acetates, acetate hydrates, trifluoroacetate hydrates, propionates, butyrates, valerates, caprylates, oleates, stearates, oxalates, tartrates, citrates, basic citrates, citrate hydrates, benzoates, salicylates, lactates, lactate hydrates, acrylic acid, maleic acid, succinic acid, glycine, phenoxides, para-phenolsulfonates, para-phenolsulfonate hydrates, acetylacetonate hydrates, tannates, dimethyldithiocarbamates, trifluoromethanesulfonate, alkylsulfonates and/or aralkylsulfonates; and/or in the form of alloys of iron with copper, tin, nickel, chromium, molybdenum, tungsten, vanadium.

16. Process according to one or more of Claims 11 to 15, **characterized in that** the following are added in the process stages: initiators, free-radical initiators, photoinitiators, inhibitors, free-radical control auxiliaries, nucleating agents, cocrystallization auxiliaries, crystallization auxiliaries, strong electrolytes, wetting agents, solvents, acids, alkalis, alkaline compounds, strongly alkaline solutions, flow auxiliaries, bleaches, coupling reagents, adhesion promoters, separating agents, plastics additives and/or coatings additives.

17. Use of flame retardant mixtures according to one or more of Claims 1 to 10 as an intermediate for further syntheses, as a binder, as a crosslinker or accelerator in the curing of epoxy resins, polyurethanes and unsaturated polyester resins, as polymer stabilizers, as crop protection compositions, as sequestrants, as a mineral oil additive, as an anticorrosive, in washing and cleaning composition applications, and in electronics applications; as flame retardants, as flame retardants for clearcoats and intumescent coatings, as flame retardants for wood and other cellulosic products, as reactive and/or nonreactive flame retardant for polymers, for production of flame-retardant polymer molding compounds, for production of flame-retardant polymer moldings and/or for rendering polyester and pure and blended cellulose fabrics flame-retardant by impregnation.

18. Flame-retardant thermoplastic or thermoset polymer molding composition, polymer moldings, films, filaments and fibers comprising 0.5% to 50% by weight of flame retardant mixtures according to one or more of Claims 1 to 10, 0.5% to 95% by weight of thermoplastic or thermoset polymer or mixtures thereof, 0% to 55% by weight of additives and 0% to 70% by weight of filler or reinforcing materials, where the sum of the components is 100% by weight; and where the polymer comprises thermoplastic polymers of the HI (high-impact) polystyrene, polyphenylene ether, polyamide, polyester or polycarbonate type, and blends or polymer blends of the ABS (acrylonitrile-butadiene-styrene) or PC/ABS (polycarbonate/acrylonitrile-butadiene-styrene) or PPE/HIPS (polyphenylene ether/HI polystyrene) polymer type, and/or thermoset polymers of the formaldehyde-, epoxide- or melamine-phenolic resin polymer, unsaturated polyester, epoxy resin and/or polyurethane type.

19. Thermoplastic or thermoset polymer molding composition, moldings, films, filaments and fibers according to Claim 18, **characterized in that** they comprise further additives, which are antioxidants, UV stabilizers, gamma ray stabilizers, hydrolysis stabilizers, antistats, emulsifiers, nucleating agents, plasticizers, processing auxiliaries, impact modifiers, dyes, pigments and others.

## Revendications

1. Mélanges d'agent ignifuge, contenant
a) 0,0001 à 74,8% en poids de sels de l'acide dialkylphosphinique de formule (II) 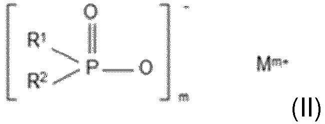 dans laquelle
R¹ et R² sont identiques ou différents et signifient C₁-C₁₈-alkyle linéaire, ramifié ou cyclique, C₆-C₁₈-aryle, C₇-C₁₈-arylalkyle et/ou C₇-C₁₈-alkylaryle,
m signifie 1 à 4 et
M signifie Mg, Ca, Al, Sb, Sn, Ge, Ti, Zr, Zn, Ce, Bi, Sr, Mn, Li, Na et/ou K en tant que composant A),
b) 0,0001 à 25% en poids de dialkylphosphinates de fer (II), de dialkylphosphinates de fer (III), de monoalkylphosphinates de fer (II), de monoalkylphosphinates de fer (III), d'alkylphosphonates de fer (II), d'alkylphosphonates de fer (III), de phosphite de fer (II), de phosphite de fer (III), de phosphate de fer (II) et/ou de phosphate de fer (III) en tant que composant B1),
c) 0,1 à 40% en poids de télomères de formule (III)
H-(C_{w}H_{2w})ₖP(C)(OM)(CₓH₂ₓ)ₗ-H (III)
où, dans la formule (III), indépendamment les uns des autres,
k signifie 1 à 9,
l signifie 1 à 9,
w signifie 2 à 9,
x signifie 2 à 9 et
M signifie Mg, Ca, Al, Sb, Sn, Ge, Ti, Fe, Zr, Zn, Ce, Bi, Sr, Mn, Li, Na, K et/ou une base azotée protonée,
et les groupes (C_{w}H_{2w})ₖ, (CxH₂ₓ)ₗ peuvent être linéaires ou ramifiés ; et/ou où les télomères sont ceux de formule (I) 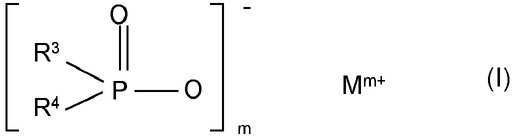 dans laquelle
R³, R⁴ sont identiques ou différents et signifient C₆-C₁₀-arylène, C₇-C₂₀-alkylarylène, C₇-C₂₀-arylalkylène et/ou C₃-C₁₆-cycloalkyle ou C₃-C₁₆-bicycloalkyle,
M signifie Mg, Ca, Al, Sb, Sn, Ge, Ti, Fe, Zr, Zn, Ce, Bi, Sr, Mn, Li, Na, K
et/ou une base azotée protonée en tant que composant C) et
d) 0,1 à 40% en poids de synergistes en tant que composant D), où il s'agit, pour les synergistes, de phosphate de mélamine, de phosphate de dimélamine, de triphosphate de pentamélamine, de diphosphate de trimélamine, de triphosphate de tétrakismélamine, de pentaphosphate d'hexakismélamine, de diphosphate de mélamine, de tétraphosphate de mélamine, de pyrophosphate de mélamine, de polyphosphate de mélamine, de polyphosphate de mélam, de polyphosphate de mélem et/ou de polyphosphate de mélon ; de produits de condensation de mélamine, tels que le mélam, le mélem et/ou le mélon ; d'esters oligomères d'isocyanurate de tris(hydroxyéthyle) avec des acides polycarboxyliques aromatiques, la benzoguanamine, l'isocyanurate de tris(hydroxyéthyle), l'allantoïne, le glyco-urile, la mélamine, le cyanurate de mélamine, le cyanurate d'urée, le dicyanodiamide et/ou la guanidine ; de phosphates contenant de l'azote des formules (NH₄)_{y}H_{3-y}PO₄ ou (NH₄PO₃)_{z}, y valant 1 à 3 et z valant 1 à 10.000 ; de phosphites d'aluminium, de pyrophosphites d'aluminium, de phosphonates d'aluminium, de pyrophosphonates d'aluminium ; de silicates, de zéolithes, de silices, de poudres céramiques, de composés à base de zinc, par exemple le borate de zinc, le carbonate de zinc, le stannate de zinc, l'hydroxystannate de zinc, le phosphate de zinc, le sulfure de zinc, l'oxyde de zinc, l'hydroxyde de zinc, l'oxyde d'étain dihydraté, le silicate de zinc basique, le molybdate de zinc, d'hydroxyde de magnésium, d'hydrotalcite, de carbonate de magnésium, de carbonate de calcium-magnésium,
la somme de A), B1), C) et D) valant 100% en poids, à condition qu'il s'agisse, pour A), B1) et C) de composés différents.

2. Mélange d'agent ignifuge selon la revendication 1, **caractérisé en ce que**, dans la formule (II), R¹, R² sont identiques ou différents et signifient, indépendamment l'un de l'autre, méthyle, éthyle, n-propyle, iso-propyle, butyle, n-butyle, tert-butyle, n-pentyle, 2-pentyle, 3-pentyle, 2-méthylbutyle, 3-méthylbutyle (iso-pentyle), 3-méthylbut-2-yle, 2-méthylbut-2-yle, 2,2-diméthylpropyle (néopentyle), hexyle, heptyle, octyle, nonyle, décyle, cyclopentyle, cyclopentyléthyle, cyclohexyle, cyclohexyléthyle, phényle, phényléthyle, méthylphényle et/ou méthylphényléthyle.

3. Mélange d'agent ignifuge selon la revendication 1 ou 2, **caractérisé en ce que** le composant B1) se trouve sous forme de bis(diéthylphosphinate) et/ou de tris(diéthylphosphinate), de bis(dipropylphosphinate) et/ou de tris(dipropylphosphinate), de bis(butyléthylphosphinate) et/ou de tris(butyléthylphosphinate), de bis(n-butyléthylphosphinate) et/ou de tris(n-butyléthylphosphinate), de bis(sec-butyléthylphosphinate) et/ou de tris(sec-butyléthylphosphinate), de bis(hexyléthylphosphinate) et/ou de tris(hexyléthylphosphinate), de bis(dibutylphosphinate) et/ou de tris(dibutylphosphinate), de bis(hexylbutylphosphinate) et/ou de tris(hexylbutylphosphinate), de bis(octyléthylphosphinate) et/ou de tris(octyléthylphosphinate), de bis(éthyl(cyclopentyléthyl)phosphinate) et/ou de tris(éthyl(cyclopentyléthyl)phosphinate), de bis(butyl(cyclopentyléthyl)phosphinate) et/ou de tris(butyl(cyclopentyléthyl)phosphinate), de bis(éthyl(cyclohexyléthyl)phosphinate) et/ou de tris(éthyl(cyclohexyléthyl)phosphinate), de bis(butyl(cyclohexyléthyl)phosphinate) et/ou de tris(butyl(cyclohexyléthyl)phosphinate), de bis(éthyl(phényléthyl)phosphinate) et/ou de tris(éthyl(phényléthyl)phosphinate), de bis(butyl(phényléthyl)phosphinate) et/ou de tris(butyl(phényléthyl)phosphinate), de bis(éthyl(4-méthylphényléthyl)phosphinate) et/ou de tris(éthyl(4-méthylphényléthyl)phosphinate), de bis(butyl(4-méthylphényléthyl)phosphinate) et/ou de tris(butyl(4-méthylphényléthyl)phosphinate), de bis(butylcyclopentylphosphinate) et/ou de tris(butylcyclopentylphosphinate), de bis(butylcyclohexyléthylphosphinate) et/ou de tris(butylcyclohexyléthylphosphinate), de bis(butylphénylphosphinate) et/ou de tris(butylphénylphosphinate), de bis(éthyl(4-méthylphényl)phosphinate) et/ou de tris(éthyl(4-méthylphényl)phosphinate) et/ou de bis(butyl(4-méthylphényl)phosphinate et/ou de (butyl(4-méthylphényl)phosphinate de fer (II) et/ou de fer (III); de mono(éthylphosphinate), de mono(propylphosphinate), de mono(butylphosphinate), de mono(n-butylphosphinate), de mono(sec-butylphosphinate), de mono(hexylphosphinate) et/ou de mono(octylphosphinate) de fer (II) et/ou de fer (III) ; d'éthylphosphonate, de propylphosphonate, de butylphosphonate, de n-butylphosphonate, de sec-butylphosphonate, d'hexylphosphonate, d'octylphosphonate de fer (II) et/ou de fer (III) ; de sels de fer (II) et/ou de fer (III) de l'acide éthyl(cyclopentyléthyl)phosphinique, de l'acide butyl(cyclopentyléthyl)phosphinique, de l'acide éthyl(cyclohexyléthyl)phosphinique, de l'acide butyl(cyclohexyléthyl)phosphinique, de l'acide éthyl(phényléthyl)phosphinique, de l'acide butyl(phényléthyl)phosphinique, de l'acide éthyl(4-méthylphényléthyl)phosphinique, de l'acide éthylphénylphosphinique, de l'acide butyl(4-méthylphényléthyl)phosphinique, de l'acide butylcyclopentylphosphinique, de l'acide butylcyclohexyléthylphosphinique, de l'acide butylphénylphosphinique, de l'acide éthyl(4-méthylphényl)phosphinique, de l'acide butyl(4-méthylphényl)phosphinique, de l'acide éthylphosphinylacétique et/ou de l'acide éthylphosphinylbutyrique, de l'acide hydroxyméthyléthyl-éthylphosphinique, de l'acide 1-hydroxy-1-méthylpropyl-éthylphosphinique, d'ester de l'acide butyléthylphosphonique, d'anhydride de l'acide acyl-éthylphosphonique, de l'acide butyléthylphosphonique, de l'acide butyléthylphosphinique, de l'éthylphosphinylisobutyronitrile (acide 1-cyano-1-méthyléthyl-éthylphosphinique), de l'acide propyléthylphosphinique, d'ester de l'acide t-butyléthylphosphonique, de l'acide t-butyl-éthylphosphinique, de l'acide hydroxyméthylbutyl-éthylphosphinique, de l'acide 3-hydroxy-3-méthylpentyl-éthylphosphinique, de l'acide propoxyéthyl-éthylphosphinique, de l'acide phényléthyl-éthylphosphinique, d'ester de l'acide 2-éthylphosphinyléthyl-laurylique, de l'acide éthylpentylphosphinique, de l'acide t-butoxyéthyl-éthylphosphinique, de nitrile de l'acide éthylphosphinylisohexanoïque, de l'acide hexyléthylphosphinique et/ou de sulfate d'éthylphosphinyléthyle.

4. Mélanges d'agent ignifuge selon l'une ou plusieurs des revendications 1 à 3, **caractérisés en ce que** dans la formule (III), w et x signifient à chaque fois 2 ou 3 et k et 1 signifient à chaque fois 3 à 1 et M signifie Al, Ti, Fe ou Zn.

5. Mélanges d'agent ignifuge selon l'une ou plusieurs des revendications 1 à 4, **caractérisés**
**en ce qu'**il s'agit, pour les télomères, de sels métalliques de l'acide éthylbutylphosphinique, dibutylphosphinique, éthylhexylphosphinique, butylhexylphosphinique, éthyloctylphosphinique, sec-butyléthylphosphinique, 1-éthylbutyl-butylphosphinique, éthyl-1-méthylpentylphosphinique, di-sec-butylphosphinique (di-1-méthylpropylphosphinique), propylhexylphosphinique, dihexylphosphinique, hexylnonylphosphinique, propylnonylphosphinique, dinonylphosphinique, dipropylphosphinique, butyl-octylphosphinique, hexyloctylphosphinique, dioctylphosphinique, éthyl(cyclopentyléthyl)phosphinique, butyl (cyclopentyléthyl)phosphinique, éthyl(cyclohexyléthyl)phosphinique, butyl (cyclohexyléthyl)phosphinique, éthyl(phényléthyl)phosphinique, butyl(phényléthyl)phosphinique, éthyl(4-méthylphényléthyl)phosphinique, butyl(4-méthylphényléthyl)phosphinique, butylcyclopentylphosphinique, butylcyclohexyléthylphosphinique, butylphénylphosphinique, éthyl(4-méthylphényl)phosphinique et/ou butyl(4-méthylphényl)phosphinique, d'éthylphosphinylisobutyronitrile (acide 1-cyano-1-méthyléthyl-éthylphosphinique), de l'acide propyléthylphosphinique, hydroxyméthylbutyl-éthylphosphinique, 3-hydroxy-3-méthylpentyl-éthylphosphinique, propoxyéthyl-éthylphosphinique, phényléthyl-éthylphosphinique, éthylpentylphosphinique, t-butoxyéthyl-éthylphosphinique, de nitrile de l'acide éthylphosphinylisohexanoïque, de l'acide hexyléthylphosphinique et/ou du sulfate d'éthylphosphinyléthyle et le métal du sel métallique étant issu du groupe Mg, Ca, Al, Sb, Sn, Ge, Ti, Fe, Zr, Zn, Ce, Bi, Sr, Mn, Li, Na et/ou K.

6. Mélange d'agent ignifuge selon l'une ou plusieurs des revendications 1 à 5, **caractérisé en ce que** les composants A) et B1) se trouvent sous forme de mélange physique.

7. Mélanges d'agent ignifuge selon l'une ou plusieurs des revendications 1 à 5, **caractérisés en ce que** les composants A), B) et C) se trouvent sous forme de mélange physique les uns avec les autres.

8. Mélanges d'agent ignifuge selon l'une ou plusieurs des revendications 1 à 5, **caractérisés en ce que** les composants A) et C) forment un composé chimique uniforme et celui-ci se trouve sous forme de mélange physique avec le composant B).

9. Mélanges d'agent ignifuge selon l'une ou plusieurs des revendications 1 à 8, **caractérisés**
**en ce qu'**ils présentent
une grosseur de particule de 0,01 à 1000 µm,
une densité apparente de 50 à 1500 g/l,
une densité tassée de 100 g/l à 1100 g/l,
un angle de déversement de 5 à 45°,
une surface BET de 1 à 40 m²/g,
une valeur chromatique L de 85 à 99,9,
une valeur chromatique a de -4 à +9,
une valeur chromatique b de -2 à +6.

10. Mélanges d'agent ignifuge selon l'une ou plusieurs des revendications 1 à 9, **caractérisés**
**en ce qu'**ils présentent
une grosseur de particule de 0,5 à 800 µm,
une densité apparente de 80 à 800 g/l,
une densité tassée de 600 g/l à 800 g/l,
un angle de déversement de 10 à 40°.

11. Procédé pour la préparation de mélanges d'agent ignifuge selon l'une ou plusieurs des revendications 1 à 10, **caractérisé en ce que**
a) dans une étape de procédé 1, on ajoute 0,9 à 1,1 molécule d'oléfine par P à un sel soluble dans l'eau de l'acide hypophosphoreux ou à l'acide lui-même,
b) dans une étape de procédé 2, on ajoute 0,9 à 1,1 molécule supplémentaire d'oléfine par P au produit intermédiaire de a) pour obtenir de l'acide dialkylphosphinique ou son sel
c) dans une étape de procédé 3, on ajoute une à 9 autres molécules d'oléfine à 0 jusqu'à 20% des molécules de dialkylphosphinate de l'étape de procédé 1, de telle sorte que des télomères se forment, où, dans le cas de la formation d'acide dialkylphosphinique, celui-ci se transforme en sel correspondant,
d) dans une étape de procédé 4, on réalise une cristallisation du produit intermédiaire de b) et/ou de c) et d'un sel métallique,
e) dans une étape de procédé 5, on ajoute en mélangeant un composé de fer/composant B.

12. Procédé pour la préparation de mélanges d'agent ignifuge selon l'une ou plusieurs des revendications 1 à 10, **caractérisé en ce que**
a) dans une étape de procédé 1, on ajoute 0,9 à 1,1 molécule d'oléfine par P à un sel soluble dans l'eau de l'acide hypophosphoreux ou à l'acide lui-même,
b) dans une étape de procédé 2, on ajoute 0,9 à 1,1 molécule supplémentaire d'oléfine par P au produit intermédiaire de a) pour obtenir de l'acide dialkylphosphinique ou son sel
c) dans une étape de procédé 3, on ajoute une à 9 autres molécules d'oléfine à 0,1 jusqu'à 20% des molécules de dialkylphosphinate de l'étape de procédé 1, de telle sorte que des télomères se forment, où, dans le cas de la formation d'acide dialkylphosphinique, celui-ci se transforme en sel correspondant,
d) dans une étape de procédé 4, on réalise une coprécipitation du produit intermédiaire de c) et d'un sel métallique et
e) dans une étape de procédé 5, on ajoute en mélangeant un composé de fer/composant B.

13. Procédé pour la préparation de mélanges d'agent ignifuge selon l'une ou plusieurs des revendications 1 à 10, **caractérisé en ce que**
a) dans une étape de procédé 1, on ajoute 0,9 à 1,1 molécule d'oléfine par P à un sel soluble dans l'eau de l'acide hypophosphoreux ou à l'acide lui-même,
b) dans une étape de procédé 2, on ajoute 0,9 à 1,1 molécule d'oléfine supplémentaire par P au produit intermédiaire de a) pour obtenir de l'acide dialkylphosphinique ou de son sel où, dans le cas de la formation d'acide dialkylphosphinique, celui-ci se transforme en sel correspondant,
c) dans une étape de procédé 3, on réalise une coprécipitation du produit intermédiaire de b) et d'un sel métallique et
d) dans une étape de procédé 4, on ajoute en mélangeant les télomères/composant C).

14. Procédé pour la préparation de mélanges d'agent ignifuge selon l'une ou plusieurs des revendications 1 à 10, **caractérisé en ce que**
a) dans une étape de procédé 1, on ajoute 0,9 à 1,1 molécule d'oléfine par P à un sel soluble dans l'eau de l'acide hypophosphoreux ou à l'acide lui-même,
b) dans une étape de procédé 2, on ajoute 0,9 à 1,1 molécule d'oléfine supplémentaire par P au produit intermédiaire de a) pour obtenir de l'acide dialkylphosphinique ou son sel où, dans le cas de la formation d'acide dialkylphosphinique, celui-ci se transforme en sel correspondant,
c) dans une étape de procédé 3, on réalise une cristallisation du produit intermédiaire de b) et d'un sel métallique,
e) dans une étape de procédé 4, on ajoute en mélangeant le cas échéant des télomères et
f) dans une étape de procédé 5, on ajoute en mélangeant un composé de fer/composant B.

15. Procédé selon l'une ou plusieurs des revendications 11 à 14, **caractérisé**
**en ce qu'**on utilise comme composés de fer et/ou comme sel de fer ceux avec des anions du septième groupe principal ; avec des anions des oxoacides du septième groupe principal ; avec des anions du sixième groupe principal ; avec des anions des oxoacides du sixième groupe principal ; avec des anions du cinquième groupe principal ; avec des anions des oxoacides du cinquième groupe principal ; avec des anions des oxoacides du quatrième groupe principal ; avec des anions des oxoacides du troisième groupe principal ; avec des anions des pseudohalogénures ; avec des anions des oxoacides des métaux de transition ; avec des anions organiques du groupe constitué par les acides monocarboxyliques, dicarboxyliques, oligocarboxyliques, polycarboxyliques, l'acide acétique, l'acide trifluoroacétique, le propionate, le butyrate, le valérate, le caprylate, l'oléate, le stéarate, l'acide oxalique, l'acide tartrique, l'acide citrique, l'acide benzoïque, le salicylate, l'acide lactique, l'acide acrylique, l'acide maléique, l'acide succinique, les aminoacides, les fonctions hydroxo acides, le para-phénolsulfonate, les hydrates de para-phénolsulfonate, les hydrates de l'acétylacétonate, les tannates, le diméthyldithiocarbamate, le trifluorométhanesulfonate, les alkylsulfonates et/ou les aralkylsulfonates ; sous forme de fer élémentaire ; sous forme d'un composé de fer sous forme de fluorure, chlorure, bromure, iodure, iodate, perchlorate, oxyde, hydroxyde, peroxyde, superoxyde, sulfate, hydrogénosulfate, sulfate hydraté, sulfite, peroxosulfate, nitrure, phosphure, nitrate, nitrate hydraté, nitrite, phosphate, peroxophosphate, phosphite, hypophosphite, pyrophosphate, carbonate, hydrogénocarbonate, hydroxyde-carbonate, carbonate hydraté, silicate, hexafluorosilicate, hexafluorosilicate hydraté, stannate, borate, polyborate, peroxoborate, thiocyanate, cyanate, cyanure, chromate, chromite, molybdate, permanganate, formiate, acétate, acétate hydraté, trifluoroacétate hydraté, propionate, butyrate, valérate, caprylate, oléate, stéarate, oxalate, tartrate, citrate, citrate basique, citrate hydraté, benzoate, salicylate, lactate, lactate hydraté, acide acrylique, acide maléique, acide succinique, glycine, phénolate, para-phénolsulfonate, para-phénolsulfonate hydraté, acétylacétonate hydraté, tannate, diméthyldithiocarbamate, trifluorométhanesulfonate, alkylsulfonate et/ou aralkylsulfonate ; et/ou sous forme d'alliages de fer avec du cuivre, de l'étain, du nickel, du chrome, du molybdène, du tungstène, du vanadium.

16. Procédé selon l'une ou plusieurs des revendications 11 à 15, **caractérisé**
**en ce qu'**on ajoute, dans les étapes de procédé, des initiateurs, des initiateurs radicalaires, des photo-initiateurs, des inhibiteurs, des adjuvants de régulation des radicaux, des agents de nucléation, des adjuvants de cocristallisation, des adjuvants de cristallisation, des électrolytes forts, des agents mouillants, des solvants, des acides, des bases, des composés alcalins, des solutions alcalines fortes, des adjuvants d'écoulement, des agents de blanchiment, des réactifs de couplage, des promoteurs d'adhérence, des agents de démoulage, des additifs pour matériaux synthétiques et/ou des additifs de revêtement.

17. Utilisation de mélanges d'agent ignifuge selon l'une ou plusieurs des revendications 1 à 10 comme produit intermédiaire pour d'autres synthèses, comme liant, comme réticulant ou, selon le cas, accélérateur lors du durcissement de résines époxy, de polyuréthanes et de résines de polyester insaturées, comme stabilisants de polymères, comme agent de phytoprotection, comme agent de séquestration, comme additif d'huile minérale, comme agent de protection contre la corrosion, dans des applications d'agents de lavage et de nettoyage et dans des applications électroniques ; comme agent ignifuge, comme agent ignifuge pour les laques claires et les revêtements intumescents, comme agent ignifuge pour le bois et d'autres produits contenant de la cellulose, comme agent ignifuge réactif et/ou non réactif pour des polymères, pour la préparation de masses de moulage polymères ignifugées, pour la fabrication de corps moulés polymères ignifugés et/ou pour l'apprêt ignifuge de polyester et de tissus en cellulose pure ou de tissus mixtes à base de cellulose par imprégnation.

18. Masse de moulage polymère, corps façonnés, films, fils et/ou fibres polymères, thermoplastiques ou thermodurcissables, ignifugés, contenant 0,5 à 50% en poids de mélanges d'agent ignifuge selon l'une ou plusieurs des revendications 1 à 10, 0,5 à 95% en poids de polymère thermoplastique ou thermodurcissable ou de mélanges de ceux-ci, 0 à 55% en poids d'additifs et 0 à 70% en poids de charge ou de matériaux de renforcement, la somme des composants valant 100% en poids et le polymère étant constitué de polymères thermoplastiques du type polystyrène-HI (High-Impact), polyphénylénéther, polyamide, polyester, polycarbonate et leurs mélange ou de mélanges polymères du type des matériaux synthétiques ABS (acrylonitrile-butadiène-styrène) ou PC/ABS (polycarbonate/acrylonitrile-butadiène-styrène) ou PPE/HIPS (polyphénylénéther/polystyrène-HI) et/ou de polymères thermodurcissables du type polymères de formaldéhyde, époxyde, mélamine-résine phénolique, de polyesters insaturés, de résines époxyde et/ou de polyuréthanes.

19. Masse de moulage polymère, corps façonnés, films, fils et/ou fibres polymères, thermoplastiques ou thermodurcissables selon la revendication 18, **caractérisés**
**en ce qu'**ils contiennent d'autres additifs, pour lesquels il s'agit d'antioxydants, de stabilisants aux UV, de stabilisants aux rayons gamma, de stabilisants à l'hydrolyse, d'agents antistatiques, d'émulsifiants, d'agents de nucléation, de plastifiants, d'adjuvants de mise en oeuvre, de modificateurs d'impact, de colorants, de pigments et autres.
